# EUROPEAN PATENT APPLICATION

(11) **EP 4 745 719 A1**
(43) Date of publication of application: **20.05.2026**
(21) Application number: 24852110.6
(22) Date of filing: 17.07.2024
(51) Int. Cl.: G06F 3/01, G06F 3/00, G06F 1/16, G06F 3/04842, G06N 3/02

(54) **WEARABLE DEVICE FOR ACQUIRING INFORMATION ON EXTERNAL SPACE INCLUDING REFLECTOR AND METHOD THEREOF**

(30) Priority: 04.08.2023 KR 20230102356; 12.09.2023 KR 20230121416
(71) Applicant: Samsung Electronics Co., Ltd., Suwon-si, Gyeonggi-do 16677 (KR)
(72) Inventor: LEE, Sanghun, Suwon-si Gyeonggi-do 16677 (KR); KIM, Sungoh, Suwon-si Gyeonggi-do 16677 (KR); YEOM, Donghyun, Suwon-si Gyeonggi-do 16677 (KR); LEE, Dasom, Suwon-si Gyeonggi-do 16677 (KR)
(74) Representative: Gulde & Partner
(86) International application number: PCT/KR2024/010297
(87) International publication number: WO 2025/033754

(57) **Abstract**

A wearable device according to an embodiment may comprise: a camera; a memory for storing instructions; and a processor for executing the instructions. The processor may be configured to obtain, by using the camera, an image of an external space including the wearable device. The processor may be configured to identify, on the basis of recognizing objects in the image, a portion of the image related to a reflector that reflects light. The processor may be configured to run a software application by using information based on whether each of feature points in the image is included in the portion, so as to provide a virtual space at least partially mapped to the external space.

## Description

### [Technical Field]

The present disclosure relates to a wearable device for obtaining information on an external space including a reflector and a method thereof.

### [Background Art]

In order to provide an enhanced user experience (UX), an electronic device that provides an augmented reality (AR) service displaying information generated by a computer in connection with an external object in the real-world is being developed. The electronic device may be a wearable device that may be worn by a user. For example, the electronic device may be AR glasses and/or a head-mounted device (HMD).

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, a wearable device may comprise a camera, memory for storing instructions, and a processor for executing the instructions. The processor may be configured to obtain an image with respect to an external space including the wearable device by using the camera. The processor may be configured to identify a portion of the image associated with a reflector reflecting light based on object recognition with respect to the image. The processor may be configured to provide, by executing a software application by using information based on whether each of feature points of the image is included in the portion, a virtual space at least partially mapped to the external space.

According to an embodiment, a method of a wearable device may comprise obtaining an image with respect to an external space including the wearable device by using a camera of the wearable device. The method may comprise identifying a portion of the image associated with a reflector reflecting light based on object recognition with respect to the image. The method may comprise providing, by executing a software application by using information based on whether each of feature points of the image is included in the portion, a virtual space at least partially mapped to the external space.

According to an embodiment, a wearable device may comprise a camera, memory for storing instructions, and a processor for executing the instructions. The processor may be configured to identify an external space including the wearable device based on first feature points in an image obtained by using the camera. The processor may be configured to identify, based on identifying the wearable device included in, among a first external space or a second external space including a reflector, the first external space next to the second external space, second feature points having coordinate values corresponding to the first external space and that were identified based on the camera. The processor may be configured to obtain, based on identifying the wearable device included, among the first external space or the second external space, in the second external space, information associated with the second external space by using the first feature points and the one or more third feature points.

According to an embodiment, a method of a wearable device may comprise identifying an external space including the wearable device based on first feature points in an image obtained by using a camera of the wearable device. The method may comprise identifying, based on identifying the wearable device included in, among a first external space or a second external space including a reflector, the first external space next to the second external space, second feature points having coordinate values corresponding to the first external space and that were identified based on the camera. The method may comprise obtaining information associated with the first external space based on the first feature points and fourth feature points, which are different from one or more third feature points associated with the reflector, among the second feature points. The method may comprise obtaining, based on identifying the wearable device included, among the first external space or the second external space, in the second external space, information associated with the second external space by using the first feature points and the one or more third feature points.

### [Description of the Drawings]

FIG. 1 illustrates an embodiment of a wearable device obtaining information on an external space.
FIGS. 2A and 2B illustrate an example of block diagrams of a wearable device according to an embodiment.
FIG. 3 illustrates an example of a flowchart of a wearable device according to an embodiment.
FIG. 4 illustrates an example of an operation of a wearable device for identifying a portion associated with a reflector in an image.
FIGS. 5A and 5B illustrate an example of an operation of a wearable device for identifying portions associated with a reflector in each of sequentially obtained images.
FIGS. 6A, 6B, and 6C illustrate an example of an operation of a wearable device identifying a location of the wearable device in an external space including a reflector.
FIG. 7 illustrates an example of a user interface (UI) displayed by a wearable device identifying a reflector.
FIG. 8 illustrates an example of a flowchart of a wearable device according to an embodiment.
FIG. 9A illustrates an example of a perspective view of a wearable device according to an embodiment.
FIG. 9B illustrates an example of one or more hardware positioned in a wearable device according to an embodiment.
FIGS. 10A to 10B illustrate an example of an exterior of a wearable device according to this configuration.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, are only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

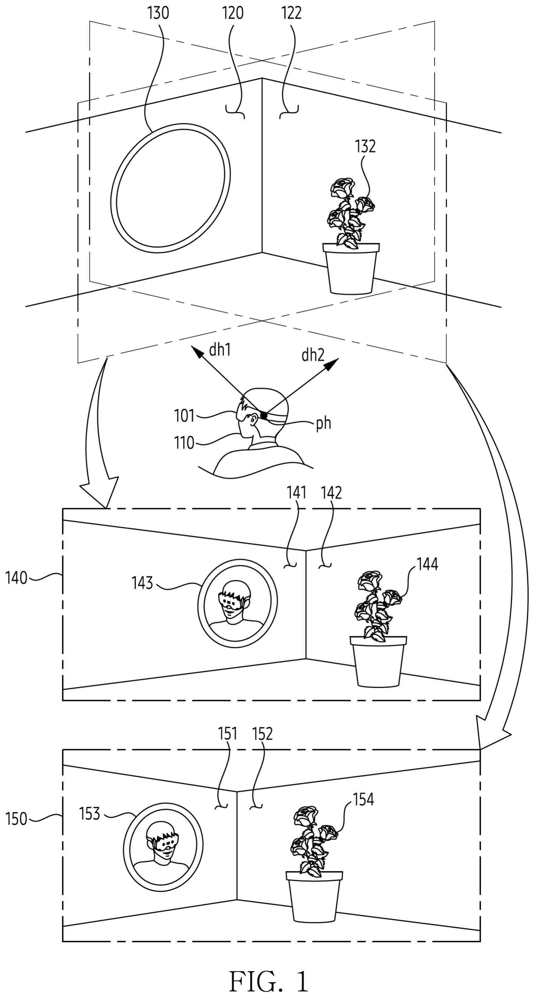

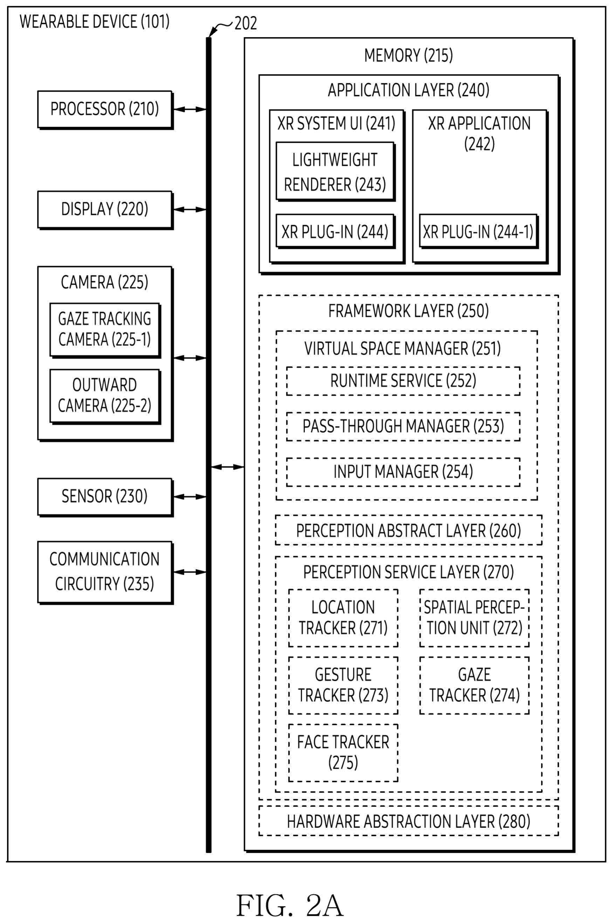

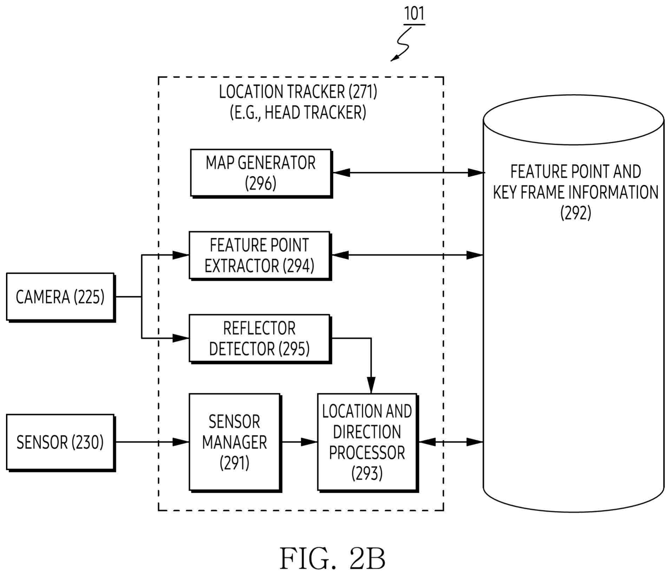

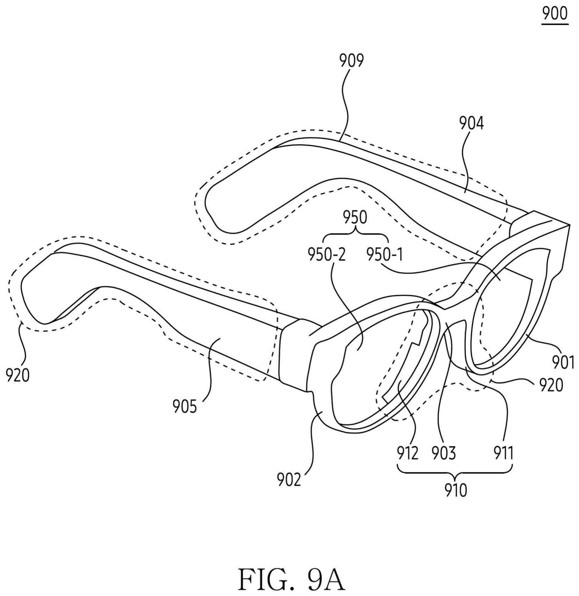

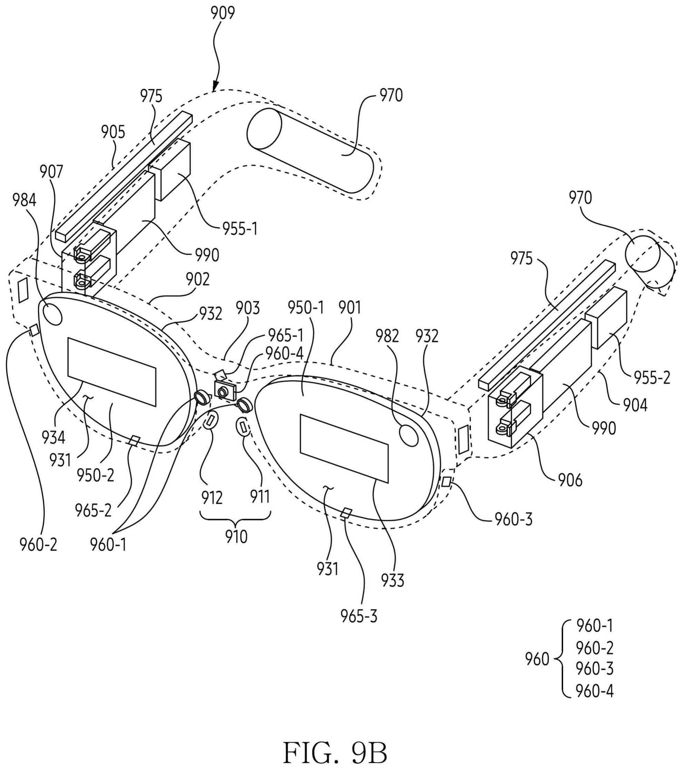

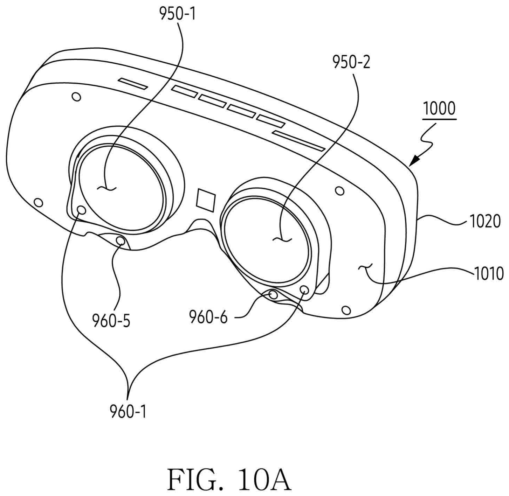

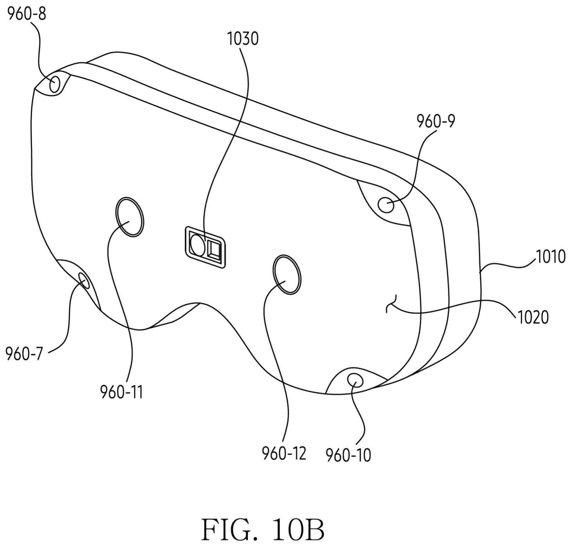

FIG. 1 illustrates an embodiment of a wearable device 101 obtaining information on an external space. The wearable device 101 may include a head-mounted display (HMD) wearable on a head of a user 110. The wearable device 101 may be referred to as a head-mounted device (HMD), a headgear electronic device, a glasses-type electronic device, a video see-through (or visible see-through) (VST) device, an extended reality (XR) device, a virtual reality (VR) device, and/or an augmented reality (AR) device. Although an external appearance of the wearable device 101 having a form of glasses is illustrated, an embodiment is not limited thereto. An example of a hardware configuration included in the wearable device 101 will be exemplarily described with reference to FIGS. 2A and/or 2B. An example of a structure of the wearable device 101 wearable on the head of the user 110 will be described with reference to FIGS. 9A, 9B, 10A and/or 10B. The wearable device 101 may be referred to as an electronic device. For example, the electronic device may form an HMD by being coupled with an accessory (e.g., a strap) to be attached to the head of the user.

According to an embodiment, the wearable device 101 may perform a function associated with augmented reality (AR) and/or mixed reality (MR). For example, in a state in which the user 110 wears the wearable device 101, the wearable device 101 may include at least one lens positioned adjacent to an eye of the user 110. The wearable device 101 may combine ambient light passing through a lens with light emitted from a display of the wearable device 101. A display area of the display may be formed in the lens through which the ambient light passes. Since the wearable device 101 combines the ambient light and the light emitted from the display, the user 110 may view an image in which a real object perceived by the ambient light and a virtual object formed by the light emitted from the display are mixed. The above-described augmented reality, mixed reality, and/or virtual reality may be referred to as extended reality (XR).

According to an embodiment, the wearable device 101 may execute a function associated with video see-through (or visible see-through) (VST) and/or virtual reality (VR). For example, in a state in which the user 110 wears the wearable device 101, the wearable device 101 may include a housing covering the eye of the user 110. In the state, the wearable device 101 may include a display positioned on a first surface of the housing directed toward the eye. The wearable device 101 may include a camera positioned on a second surface opposite to the first surface. By using the camera, the wearable device 101 may obtain an image and/or a video representing ambient light. The wearable device 101 may allow the user 110 to perceive the ambient light through the display, by outputting the image and/or the video in the display positioned on the first surface. A display area (or an active area) of the display positioned on the first surface may be formed by one or more pixels included in the display. The wearable device 101 may allow the user 110 to perceive a virtual object together with a real object perceived by the ambient light by synthesizing the virtual object with the image and/or the video outputted through the display.

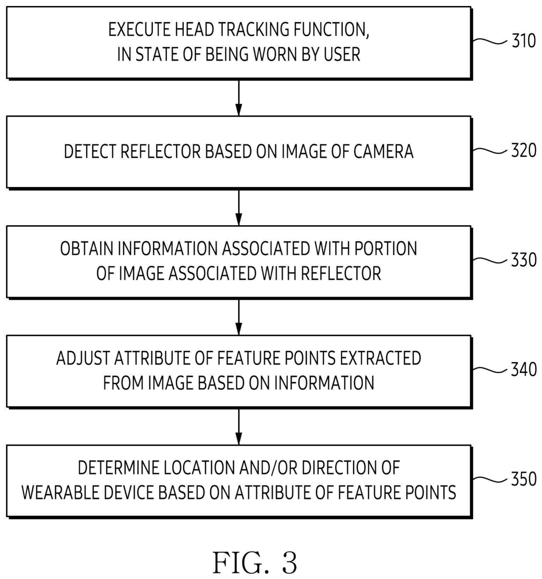

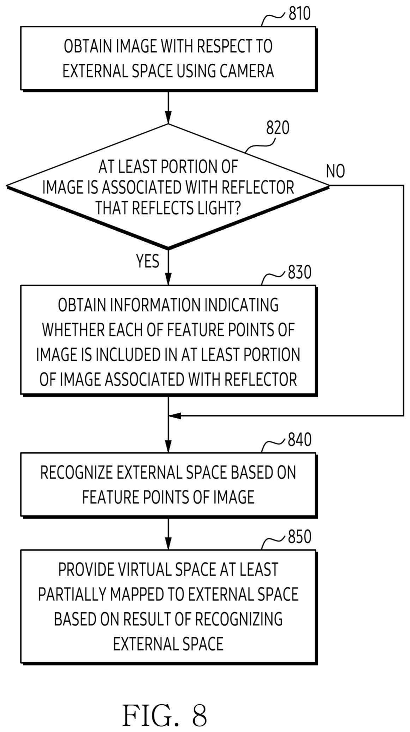

According to an embodiment, the wearable device 101 may identify or recognize a location (or a position) and/or a direction (an orientation) of the wearable device 101 based on an image (and/or a video) obtained (or acquired) by using a camera. An exemplary operation of the wearable device 101 identifying the location based on the image will be described with reference to FIGS. 3 and/or 8. Referring to FIG. 1, exemplary images 140 and 150 obtained by a camera included in the wearable device 101 are illustrated. By using a camera positioned toward a direction (e.g., a front direction) of the wearable device 101, the wearable device 101 may obtain an image of an external space. While being worn by the user 110, the wearable device 101 may obtain the images 140 and 150 by controlling the camera. The image 140 may be obtained while the user 110 wearing the wearable device 101 looks in a direction dh1. The image 150 may be obtained while the user 110 wearing the wearable device 101 looks in a direction dh2.

Referring to FIG. 1, an exemplary environment of the wearable device 101 positioned in the external space including a reflector 130 such as a mirror is illustrated. The reflector 130 may include a material (e.g., glass, acrylic, metal and/or liquid) for reflecting ambient light. An embodiment is not limited thereto, and the reflector 130 may include an electronic device including a selfie camera, such as a smart mirror. The reflector 130 may have relatively high reflexibility. The reflector 130 may include a surface in which the material is uniformly distributed. In the exemplary environment of FIG. 1, incident light of the surface of the reflector 130 may be at least partially reflected toward the wearable device 101. Referring to FIG. 1, portions of the images 140 and 150 corresponding to the reflector 130 may represent reflected light propagated toward the wearable device 101.

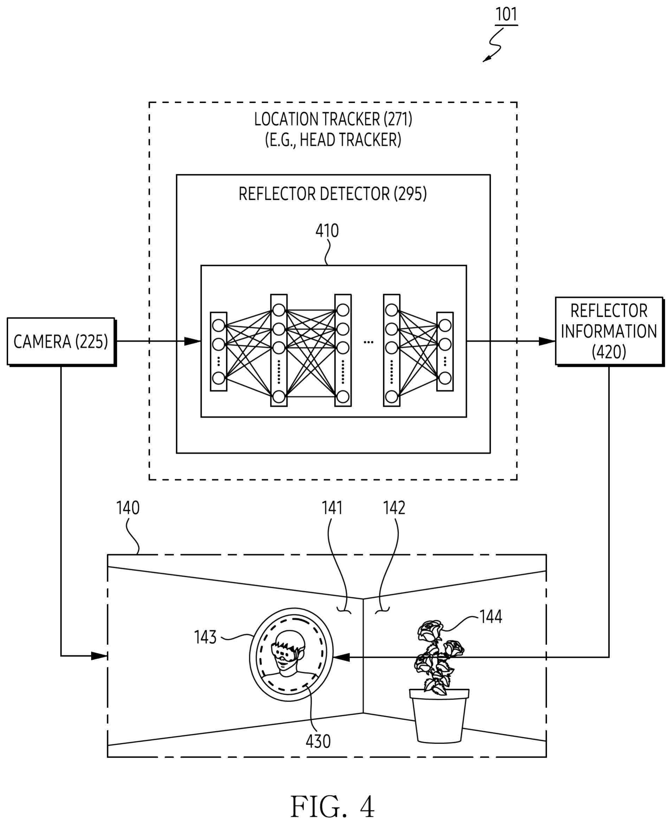

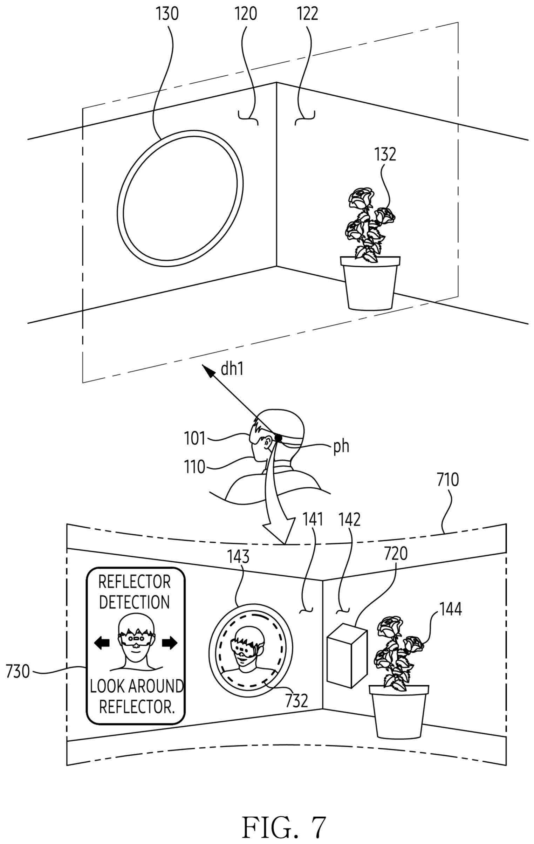

The wearable device 101 may identify, based on object recognition with respect to an image (e.g., the images 140 and 150), one or more external objects associated with the image. For example, in the image 140, the wearable device 101 may identify wall surfaces 120 and 122 respectively corresponding to the visual objects 141 and 142. In the image 140, the wearable device 101 may identify, based on a visual object 144, a flowerpot 132 positioned in the external space. In the image 140, the wearable device 101 may identify, based on a visual object 143, the reflector 130. Based on visual objects 141, 142, 143, and 144 segmented from the image 140, the wearable device 101 may identify locations of external objects (e.g., the wall surfaces 120 and 122, the flowerpot 132, and/or the reflector 130). Similarly, based on visual objects 151, 152, 153, and 154 segmented from the image 150, the wearable device 101 may identify locations of external objects (e.g., the wall surfaces 120 and 122, the flowerpot 132, and/or the reflector 130). The location of the external object identified by the wearable device 101 may correspond to a relative location of the external object with respect to the wearable device 101. Such as the visual object 143, an operation of the wearable device 101 identifying a portion of the image 140 associated with the reflector 130 will be described with reference to FIG. 4. An example of a user interface (UI) displayed by the wearable device 101 identifying the reflector 130 will be described with reference to FIG. 7.

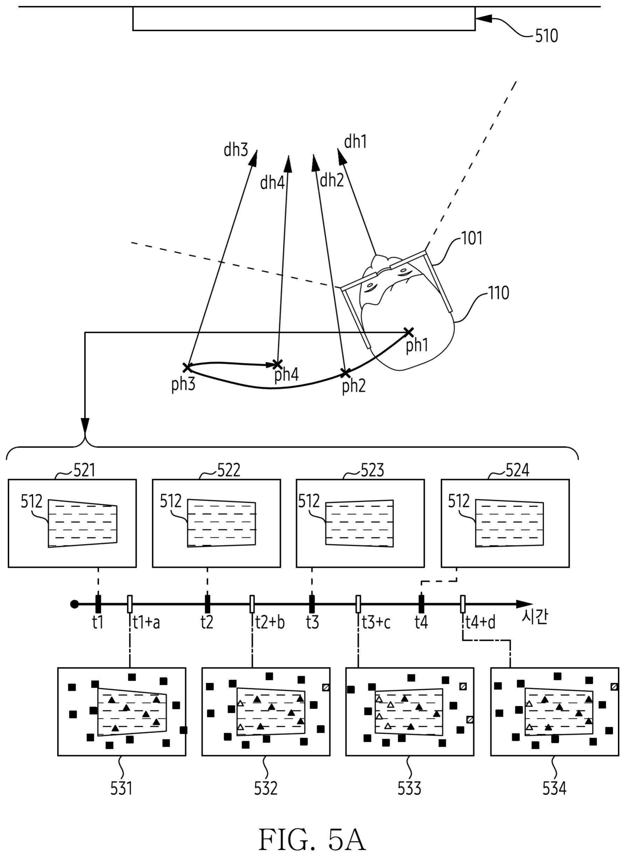

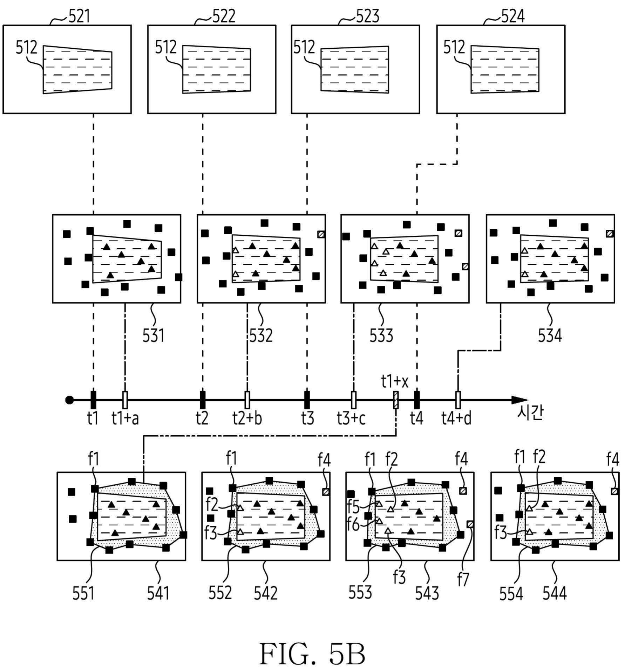

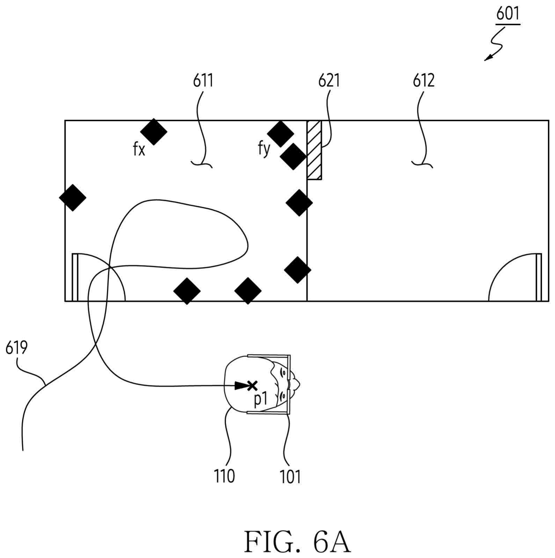

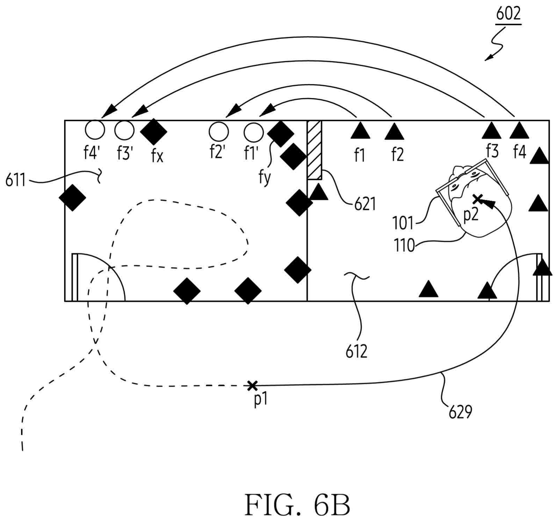

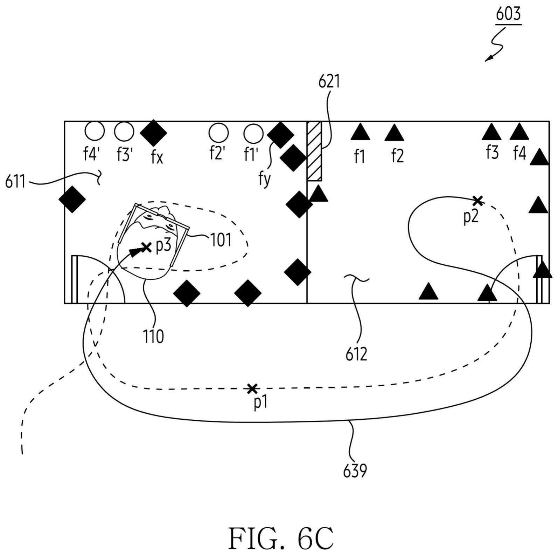

For example, the reflector 130 may reflect light of an external object different from the reflector 130 toward the wearable device 101. For example, the user 110 wearing the wearable device 101 adjacent to the reflector 130 may be captured in a portion of the image 140 corresponding to the reflector 130. Similarly, the user 110 wearing the wearable device 101 may be captured in a portion of the image 150 corresponding to the reflector 130. The wearable device 101 may more accurately compute, in each of the images 140 and 150, the location and/or the direction of the wearable device 101 based on the visual objects 143 and 153 determined to correspond to the reflector 130. For example, the wearable device 101 may identify whether each of feature points of the image 140 corresponds to reflected light of the reflector 130. The wearable device 101 may determine whether to use each of the feature points to compute the location and/or direction of the wearable device 101 based on whether each of the feature points of the image 140 corresponds to the reflected light of the reflector 130. An operation of the wearable device 101 for determining whether each of the feature points corresponds to the reflected light will be described with reference to FIGS. 5A, 5B, 6A, 6B and/or 6C.

In an embodiment, the location and/or the direction of the wearable device 101 computed by the wearable device 101 may be used to execute a software application (e.g., a software application for virtual reality) of the wearable device 101. For example, the wearable device 101 may execute the software application based on information indicating whether each of the feature points of the image 140 is included in a portion of the image 140 associated with the reflector 130. The wearable device 101 executing the software application may display, based on the information, a virtual space provided by the software application and at least partially mapped to (or coupled to) the external space.

An operation of computing the location and/or the direction of the wearable device 101 may be referred to as head tracking (HeT) (or a head tracking function) in terms of tracking a location and/or a direction of the head of the user 110 wearing the wearable device 101. For example, the wearable device 101 may identify a location ph of the head of the user 110 and/or the wearable device 101 based on at least one of the images 140 and 150. The wearable device 101 may identify each of the directions dh1 and dh2 of the head and/or the wearable device 101 at timings when each of the images 140 and 150 is captured. While displaying the virtual space mapped to the external space, the wearable device 101 obtaining the image 140 may display one or more virtual objects set to be positioned in the direction dh1. In a case that the user 110 looking in the direction dh1 rotates the head toward the direction dh2, the wearable device 101 may display another virtual object set to be positioned in the direction dh2, based on obtaining the image 150. Based on head tracking, the wearable device 101 may display a screen (e.g., a screen based on AR and/or VR) synchronized with a motion of the head of the user 110.

As described above, the wearable device 101 according to an embodiment may identify, based on object recognition with respect to an image (e.g., images 140 and 150), at least a portion of the image associated with the reflector 130 reflecting light. For example, the wearable device 101 may obtain information including at least one of a shape, a location, or a size of the portion in the image. The at least a portion of the image associated with the reflector 130 may be referred to as a reflector area. The wearable device 101 may more accurately compute the location and/or the direction of the wearable device 101 based on a location relationship between feature points of the image and the reflector area.

Hereinafter, an example of a hardware configuration included in the wearable device 101 for head tracking will be described with reference to FIGS. 2A and/or 2B.

FIGS. 2A and 2B illustrate an example of block diagrams of a wearable device 101 according to an embodiment. The wearable device 101 described with reference to FIG. 1 may include at least one of hardware components of the wearable device 101 distinguished by different blocks of FIGS. 2A and/or 2B.

Referring to FIG. 2A, the wearable device 101 according to an embodiment may include at least one of a processor 210, memory 215, a display 220, a camera 225, a sensor 230, or communication circuitry 235. The processor 210, the memory 215, the display 220, the camera 225, the sensor 230, and/or the communication circuitry 235 may be electronically and/or operably coupled with each other by an electronical component such as a communication bus 202. A type and/or the number of hardware components included in the wearable device 101 is not limited to those illustrated in FIG. 2A. For example, the wearable device 101 may include only some of the hardware components illustrated in FIG. 2A.

The processor 210 of the wearable device 101 according to an embodiment may include a hardware component for processing data based on one or more instructions. The hardware component for processing data may include, for example, an arithmetic and logic unit (ALU), a field programmable gate array (FPGA), a central processing unit (CPU), and/or an application processor (AP). In an embodiment, the wearable device 101 may include one or more processors. The processor 210 may have a structure of a multi-core processor such as a dual core, a quad core, a hexa core, and/or an octa core.

The memory 215 of the wearable device 101 according to an embodiment may include a hardware component for storing data and/or instructions inputted to and/or outputted from the processor 210. The memory 215 may include, for example, a volatile memory, such as a randomaccess memory (RAM), and/or a non-volatile memory, such as a read-only memory (ROM). The volatile memory may include, for example, at least one of a dynamic RAM (DRAM), a static RAM (SRAM), a Cache RAM, and a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disc, and an embedded multimedia card (eMMC). In an embodiment, the memory 215 may be referred to as storage.

In an embodiment, the display 220 of the wearable device 101 may output visualized information (e.g., a screen 710 of FIG. 7) to a user (e.g., the user 110 of FIG. 1) of the wearable device 101. For example, the display 220 may output visualized information to the user by being controlled by the processor 210 including circuitry such as a graphic processing unit (GPU). The display 220 may include a flexible display, a flat panel display (FPD) and/or electronic paper. The FPD may include a liquid crystal display (LCD), a plasma display panel (PDP), and/or one or more light emitting diodes (LEDs). The LED may include an organic LED (OLED). An embodiment is not limited thereto, and for example, in a case that the wearable device 101 includes a lens for transmitting external light (or ambient light), the display 220 may include a projector (or a projection assembly) for projecting light onto the lens. In an embodiment, the display 220 may be referred to as a display panel and/or a display module.

In an embodiment, the camera 225 of the wearable device 101 may include one or more optical sensors (e.g., a charged coupled device (CCD) sensor and a complementary metal oxide semiconductor (CMOS) sensor) that generate an electrical signal indicating a color and/or brightness of light. The camera 225 may be referred to as an image sensor and may be included in the sensor 230 of FIG. 2A. A plurality of optical sensors included in the camera 225 may be positioned in a form of a two-dimensional array. The camera 225 may generate a two-dimensional frame data corresponding to light reaching the optical sensors of the two-dimensional array by obtaining electrical signals of each of the plurality of optical sensors substantially simultaneously. For example, photo data captured using the camera 225 may mean a two-dimensional frame data obtained from the camera 225. For example, video data captured using the camera 225 may mean a sequence of a plurality of two-dimensional frame data obtained from the camera 225 according to a frame rate. The camera 225 may further include a flash light, positioned toward a direction in which the camera 225 receives light, for outputting light toward the direction.

The wearable device 101 according to an embodiment may include a plurality of cameras positioned toward different directions as an example of the camera 225. Referring to FIG. 2A, the camera 225 included in the wearable device 101 may include a gaze tracking camera 225-1 and/or an outward camera 225-2. The gaze tracking camera 225-1 may be positioned toward at least one of two eyes of the user wearing the wearable device 101. The processor 210 may identify a direction of a gaze of the user by using an image and/or a video obtained from the gaze tracking camera 225-1. The gaze tracking camera 225-1 may include an infrared (IR) sensor. The gaze tracking camera 225-1 may be referred to as an eye sensor, a gaze tracker, and/or an eye tracker.

In an embodiment, the outward camera 225-2 may be positioned toward a front direction (e.g., a direction in which two eyes may be directed) of the user wearing the wearable device 101. A direction in which the outward camera 225-2 is directed is not limited to the front direction. The outward camera 225-2 may be positioned on any surface among surfaces different from a surface of the wearable device 101 in contact with the user in a state of being worn by the user. Using an image and/or a video obtained from the outward camera 225-2, the processor 210 may identify an external object (e.g., the reflector 130 of FIG. 1). An embodiment is not limited thereto, and the processor 210 may identify a location, a shape, and/or a gesture (e.g., a hand gesture) of a hand based on the image and/or the video obtained from the outward camera 225-2.

According to an embodiment, the sensor 230 of the wearable device 101 may generate electronic information that may be processed and/or stored by the processor 210 and/or the memory 215 of the wearable device 101 from non-electronic information associated with the wearable device 101. The information may be referred to as sensor data. The sensor 230 may include a global positioning system (GPS) sensor for detecting a geographic location of the wearable device 101, an image sensor, an illumination sensor, and/or a time-of-flight (ToF) sensor (or a ToF camera).

In an embodiment, the sensor 230 may include an inertial measurement unit (IMU) for detecting a physical motion of the wearable device 101. An acceleration sensor, a geomagnetic sensor, a gyro sensor, or a combination thereof may be referred to as the IMU. The acceleration sensor may output an electrical signal indicating gravitational acceleration and/or acceleration of each of a plurality of axes (e.g., an x-axis, a y-axis, and a z-axis) perpendicular to each other and based on a preset origin of the wearable device 101. The gyro sensor may output an electrical signal indicating an angular velocity of each of the plurality of axes. The gyro sensor may be referred to as an angular velocity sensor. The geomagnetic sensor may output an electrical signal indicating a magnitude of a magnetic field formed in the wearable device 101 along each of the plurality of axes (e.g., the x-axis, the y-axis, and/or the z-axis). For example, the acceleration sensor, the gyro sensor, and/or the geomagnetic sensor may repeatedly output sensor data including accelerations, angular velocities, and/or magnetic field magnitudes corresponding to the number of the plurality of axes, based on a preset period (e.g., 1 millisecond).

In an embodiment, the communication circuitry 235 of the wearable device 101 may include circuitry for supporting transmission and/or reception of an electrical signal between the wearable device 101 and an external electronic device. The communication circuitry 235 may include, for example, at least one of a modulator and demodulator (MODEM), an antenna, or an optic/electronic (O/E) converter. The communication circuitry 235 may support transmission and/or reception of an electrical signal based on various types of protocols, such as Ethernet, local area network (LAN), wide area network (WAN), wireless fidelity (WiFi), Bluetooth, Bluetooth Low Energy (BLE), ZigBee, long term evolution (LTE), 5G new radio (NR), 6G, and/or above-6G. In an embodiment, the communication circuitry 235 may be referred to as a communication processor and/or a communication module.

According to an embodiment, in the memory 215 of the wearable device 101, one or more instructions (or commands) indicating data to be processed, a computation to be performed, and/or an operation to be performed by the processor 210 of the wearable device 101 may be stored. A set of one or more instructions may be referred to as firmware, an operating system, a process, a routine, a sub-routine and/or a software application (hereinafter, an application). For example, the wearable device 101 and/or processor 210 may perform at least one of operations of FIGS. 3 and/or 8, when a set of a plurality of instructions distributed in a form of an operating system, firmware, a driver, and/or an application is executed. Hereinafter, an application being installed in the wearable device 101 may mean that one or more instructions provided in a form of an application are stored in the memory 215, and that the one or more applications are stored in a format (e.g., a file having an extension preset by an operating system of the wearable device 101) executable by the processor 210. As an example, an application may include a program and/or a library associated with a service provided to the user.

Referring to FIG. 2A, programs installed in the wearable device 101 may be classified into any one layer among different layers including an application layer 240, a framework layer 250, and/or a hardware abstraction layer (HAL) 280, based on a target. For example, in the hardware abstraction layer 280, programs (e.g., a module or a driver) designed to target hardware (e.g., the display 220, the camera 225, the sensor 230 and/or the communication circuitry 235) of the wearable device 101 may be classified. The framework layer 250 may be referred to as an XR framework layer in terms of including one or more programs for providing an extended reality (XR) service. For example, the layers illustrated in FIG. 2A are logically (or for convenience of explanation) divided, and this may not mean that an address space of the memory 215 is divided by the layers.

For example, in the framework layer 250, programs (e.g., a location tracker 271, a spatial perception unit 272, a gesture tracker 273, a gaze tracker 274, and/or a face tracker 275) designed to target at least one of the hardware abstraction layer 280 and/or the application layer 240 may be classified. The programs classified as the framework layer 250 may provide an application programming interface (API) executable based on another program.

For example, in the application layer 240, a program designed to target the user of the wearable device 101 may be classified. As an example of the programs classified as the application layer 240, an extended reality (XR) system user interface (UI) 241 and/or an XR application 242 are exemplified, but an embodiment is not limited thereto. For example, the programs (e.g., a software application) classified as the application layer 240 may cause execution of a function supported by the programs classified as the framework layer 250 by calling an application programming interface (API).

For example, based on execution of the XR system UI 241, the wearable device 101 may display, on the display 220, one or more visual objects to perform interaction with a user for using a virtual space. The visual object may mean an object deployable in a screen for transmission of information and/or interaction, such as text, an image, an icon, a video, a button, a checkbox, a radio button, a text box, a slider, and/or a table. The visual object may be referred to as a visual guide, a virtual object, a visual element, a UI element, a view object, and/or a view element. The wearable device 101 may provide functions available in the virtual space to the user based on the execution of the XR system UI 241.

Referring to FIG. 2A, it is illustrated that a lightweight renderer 243 and/or an XR plug-in 244 are included in the XR system UI 241, but is not limited thereto. For example, based on the XR system UI 241, the processor 210 may execute the lightweight renderer 243 and/or the XR plug-in 244 in the framework layer 250.

For example, the wearable device 101 may obtain a resource (e.g., an API, a system process, and/or a library) used to define, generate, and/or execute a rendering pipeline in which a partial change is allowed, based on execution of the lightweight renderer 243. The lightweight renderer 243 may be referred to as a lightweight render pipeline in terms of defining the rendering pipeline in which the partial change is allowed. The lightweight renderer 243 may include a renderer (e.g., a prebuilt renderer) built before execution of a software application. For example, the wearable device 101 may obtain a resource (e.g., an API, a system process, and/or a library) used to define, generate, and/or execute an entire rendering pipeline based on execution of the XR plug-in 244. The XR plug-in 244 may be referred to as an open XR native client in terms of defining (or setting) the entire rendering pipeline.

For example, the wearable device 101 may display, on the display 220, a screen indicating at least a portion of the virtual space based on execution of the XR application 242. An XR plug-in 244-1 included in the XR application 242 may include instructions that support a function similar to the XR plug-in 244 of the XR system UI 241. Among descriptions of the XR plug-in 244-1, descriptions overlapping descriptions of the XR plug-in 244 may be omitted. The wearable device 101 may cause execution of a virtual space manager 251 based on execution of the XR application 242.

According to an embodiment, the wearable device 101 may provide a virtual space service based on the execution of the virtual space manager 251. For example, the virtual space manager 251 may include a platform for supporting the virtual space service. Based on the execution of the virtual space manager 251, the wearable device 101 may may identify a virtual space formed based on a location of a user indicated by data obtained through the sensor 230, and may display at least a portion of the virtual space on the display 220. The virtual space manager 251 may be referred to as a composition presentation manager (CPM).

For example, the virtual space manager 251 may include a runtime service 252. As an example, the runtime service 252 may be referred to as an OpenXR runtime module (or an OpenXR runtime program). Based on execution of the runtime service 252, the wearable device 101 may execute at least one of a user pose prediction function, a frame timing function, and/or a spatial input function. As an example, the wearable device 101 may perform rendering for the virtual space service to the user based on the execution of the runtime service 252. For example, based on the execution of the runtime service 252, a function associated with a virtual space, executable by the application layer 240, may be supported.

For example, the virtual space manager 251 may include a pass-through manager 253. Based on execution of the pass-through manager 253, the wearable device 101 may overlappingly display another screen indicating a real space obtained through the outward camera 225-2 on at least a portion of a screen while displaying the screen indicating a virtual space on the display 220.

For example, the virtual space manager 251 may include an input manager 254. Based on execution of the input manager 254, the wearable device 101 may identify data (e.g., sensor data) obtained by executing one or more programs included in a perception service layer 270. The wearable device 101 may identify a user input associated with the wearable device 101 by using the obtained data. The user input may be associated with a motion (e.g., a hand gesture), a gaze, and/or speech of the user identified by the sensor 230.

For example, the perception abstract layer 260 may be used for data exchange between the virtual space manager 251 and the perception service layer 270. In terms of being used for data exchange between the virtual space manager 251 and the perception service layer 270, the perception abstract layer 260 may be referred to as an interface. As an example, the perception abstract layer 260 may be referenced as OpenPX. The perception abstract layer 260 may be used for a perception client and a perception service.

According to an embodiment, the perception service layer 270 may include one or more programs for processing data obtained from the sensor 230 and/or the camera 225. The one or more programs may include at least one of the location tracker 271, the spatial perception unit 272, the gesture tracker 273, the gaze tracker 274, and/or the face tracker 275. A type and/or the number of the one or more programs included in the perception service layer 270 is not limited to those illustrated in FIG. 2A.

For example, based on execution of the location tracker 271, the wearable device 101 may identify a posture of the wearable device 101 using the sensor 230. Based on the execution of the location tracker 271, the wearable device 101 may identify a 6 degrees of freedom pose (6 DoF pose) of the wearable device 101 by using data obtained using the outward camera 225-2 and/or the IMU (e.g., the gyro sensor, the acceleration sensor and/or the geomagnetic sensor). The location tracker 271 may be referred to as a head tracking (HeT) module (or a head tracker or a head tracking program).

For example, based on execution of the spatial perception unit 272, the wearable device 101 may obtain information for providing a three-dimensional virtual space corresponding to a surrounding environment (e.g., an external space) of the wearable device 101 (or the user of the wearable device 101). Based on the execution of the spatial perception unit 272, the wearable device 101 may reconstruct the surrounding environment of the wearable device 101 in three dimensions by using data obtained using the outward camera 225-2. The wearable device 101 may identify at least one of a plane, an inclination, and a step based on the surrounding environment of the wearable device 101 reconstructed in three dimensions based on the execution of the spatial perception unit 272. The spatial perception unit 272 may be referred to as a scene understanding (SU) module (or a scene understanding program).

For example, the wearable device 101 may identify (or perceive) a pose and/or a gesture of the hand of the user of the wearable device 101 based on execution of the gesture tracker 273. As an example, based on the execution of the gesture tracker 273, the wearable device 101 may identify the pose and/or the gesture of the hand of the user by using data obtained from the outward camera 225-2. As an example, based on the execution of the gesture tracker 273, the wearable device 101 may identify the pose and/or the gesture of the hand of the user based on data (or an image) obtained using the outward camera 225-2. The gesture tracker 273 may be referred to as a hand tracking (HaT) module (or a hand tracking program) and/or a gesture tracking module.

For example, the wearable device 101 may identify (or track) movement of an eye of the user of the wearable device 101 based on execution of the gaze tracker 274. As an example, the wearable device 101 may identify the movement of the eye of the user by using data obtained from the gaze tracking camera 225-1 on the execution of the gaze tracker 274. The gaze tracker 274 may be referred to as an eye tracking (ET) module (or an eye tracking program) and/or a gaze tracking module.

For example, the perception service layer 270 of the wearable device 101 may further include the face tracker 275 for tracking a face of the user. For example, a wearable device 103 may identify (or track) movement of the face of the user and/or facial expression of the user based on execution of the face tracker 275. Based on the execution of the face tracker 275, the wearable device 101 may estimate the facial expression of the user based on the movement of the face of the user. As an example, based on the execution of the face tracker 275, the wearable device 101 may identify the movement of the face of the user and/or the facial expression of the user based on data (e.g., an image) obtained using the sensor 230 (e.g., an image sensor facing at least a portion of the face of the user).

According to an embodiment, the wearable device 101 may identify a location of the wearable device 101 in an external space, indicated by information obtained from the camera 225 and/or the sensor 230. Based on the location, the wearable device 101 may provide at least a portion of a virtual space mapped to (or coupled to) the external space. For example, based on the location, the wearable device 101 may determine a location of the wearable device 101 in the virtual space. The location determined in the virtual space may correspond to a reference point (e.g., a view point) for displaying a portion of the virtual space to be displayed through the display 220. The processor 210 of the wearable device 101 may execute one or more instructions for identifying the location in the external space, by executing the location tracker 271 of FIG. 2A.

Referring to FIG. 2B, instructions included in the location tracker 271 may be distinguished into a sensor manager 291, a location and direction processor 293, a feature point extractor 294, a reflector detector 295, and/or a map generator 296 based on a function. The instructions may be executed by the processor 210 of the wearable device 101.

Based on execution of the sensor manager 291, the wearable device 101 may store sensor data of the sensor 230 in the memory 215 of the wearable device 101. Based on the execution of the sensor manager 291, the wearable device 101 may manage the sensor data stored in the memory 215. For example, the wearable device 101 may store and/or delete sensor data (e.g., an angular velocity, an acceleration, and/or a magnetic field direction) obtained from an IMU in the memory 215. The wearable device 101 may obtain a value that integrates the angular velocity, the acceleration, and/or the magnetic field direction included in the sensor data obtained from the IMU. The value obtained by the wearable device 101 may indicate a direction and/or a location of the wearable device 101 in an external space. By integrating images and/or sensor data accumulated in a specific time period, the wearable device 101 may obtain vector data corresponding to the time period. The vector data may be obtained to reduce an amount of computation required to identify the location and/or the direction of the wearable device 101. The wearable device 101 may obtain the vector data in response to a call of an API for integrating sensor data. An embodiment is not limited thereto, and the wearable device 101 may store the images and/or the sensor data accumulated during the specific time period in the memory 215 of the wearable device 101.

Based on execution of the feature point extractor 294, the wearable device 101 may identify one or more feature points from an image (e.g., a frame image of a video) (e.g., the images 140 and 150 of FIG. 1) obtained from the camera 225. A feature point (or a keypoint) of an image may be a point in the image, which is used to check a feature of the image (or an object captured by the image). For example, by comparing feature points included in each of different images, the wearable device 101 may identify an external object commonly captured in the images. By comparing feature points of different images, the wearable device 101 may identify a landmark of an external object commonly captured in the images. Based on the feature points included in the image, the wearable device 101 may compute three-dimensional spatial coordinates of the external object associated with the feature points. Based on the feature points included in the image, the wearable device 101 may determine the image as a key frame.

Based on the execution of the feature point extractor 294, the wearable device 101 may perform a computation indicated by an algorithm such as scale invariant feature transform (SIFT), harris corner detection, features from accelerated segment test (FAST), and/or oriented fast and rotated brief (ORB). Based on the computation, the wearable device 101 may extract feature points from an image, or may perform a comparison (or matching) of feature points included in images. By comparing the feature points included in the images obtained at different timings and/or locations, the wearable device 101 may determine three-dimensional coordinates of each of the feature points. The wearable device 101 identifying feature points commonly included in a plurality of images may obtain information indicating timings identifying the feature points (or the plurality of images).

Based on the execution of the feature point extractor 294, the wearable device 101 may obtain, from an image obtained from the camera 225, one or more feature points used to compute a location and/or a direction of the wearable device 101. The wearable device 101 obtaining a plurality of images may select and/or determine a key frame among the plurality of images based on the number of feature points extracted from each of the plurality of images. For example, an image in which the relatively large number (or the number, which is more than a preset number) of feature points is detected may be selected as a key frame. For example, by comparing feature points commonly included in different images, the wearable device 101 may select an image with the relatively small number of feature points common to another image obtained at a timing before a specific timing of identifying an image, as a key frame. The wearable device 101 may store, in the memory 215 of the wearable device 101, information 292 indicating feature points extracted from images and/or a result of selecting a key frame.

Based on execution of the reflector detector 295, the wearable device 101 may identify at least a portion corresponding to a reflector (e.g., the reflector 130 of FIG. 1) in an image. The wearable device 101 identifying the at least a portion corresponding to the reflector may compute a location and/or a size of the at least a portion in the image. The wearable device 101 may compute a location (e.g., a relative location with respect to the wearable device 101) and/or a size of the reflector based on the at least a portion.

The wearable device 101 according to an embodiment may execute, based on the reflector detector 295, a computation model for extracting a reflector from an image. The computation model may include an artificial neural network that simulates a human reasoning activity. For example, the computation model may include an artificial neural network, such as a convolution neural network (CNN), for processing an image, which is a group of pixels arranged in two dimensions. An embodiment is not limited thereto, and the computation model may include a feedforward neural network (FNN), a long-short term memory (LSTM), and/or a recurrent neural network (RNN). The artificial neural network simulated based on the reflector detector 295 may be a pre-trained model based on supervised learning and/or unsupervised learning.

Based on the execution of the reflector detector 295, the wearable device 101 may obtain information (e.g., a probability map) including probabilities that each of pixels included in an image corresponds to a reflector. Based on the information, the wearable device 101 may identify a portion (e.g., a portion having a quadrangular and/or circular shape) of the image corresponding to the reflector. Based on the execution of the feature point extractor 294, the wearable device 101 identifying one or more feature points from the image may determine whether each of the one or more feature points corresponds to a reflector, based on the probabilities obtained by the reflector detector 295. The wearable device 101 may store, in the information 292 stored in the memory, a parameter (e.g., a flag and/or a probability) indicating whether each of the feature points included in the information 292 corresponds to a reflector.

Based on execution of the map generator 296, the wearable device 101 may generate map information on an external space where the wearable device 101 is located, by using the information 292 indicating the feature point and/or the key frame. The wearable device 101 may generate map information (e.g., a local map) on each of different external spaces having a size less than a preset size. The wearable device 101 may merge the map information on each of the external spaces. By comparing an image obtained in real time using the camera 225 with the map information generated by the map generator 296, the wearable device 101 may determine whether a current location of the wearable device 101 corresponds to the external space and/or a point corresponding to the map information. When the current location corresponds to the point corresponding to the map information, the wearable device 101 may identify a revisitation of the wearable device 101 to the point.

The map information (e.g., the local map) generated based on the execution of the map generator 296 may include information on feature points and/or a key frame used to generate the map information. The map information generated based on the execution of the map generator 296 may be stored in the memory 215 of the wearable device 101. Based on the execution of the map generator 296, the wearable device 101 may manage (e.g., generate and/or delete) the map information stored in the memory 215. In an embodiment, the map information may be a unit that stores the feature points and/or the key frame obtained (or extracted) based on the feature point extractor 294. By comparing different local maps, the wearable device 101 may determine whether to merge the local maps. For example, in a case that similarity between the local maps is greater than a preset threshold, the wearable device 101 may merge the local maps. The wearable device 101 merging the local maps may mean managing (e.g., transmitting, copying, and/or deleting) feature points and/or key frames corresponding to each of the local maps as a single unit.

Based on the execution of the map generator 296, the wearable device 101 may determine the current location of the wearable device 101 from the image identified in real time from the camera 225. For example, in a case that feature points corresponding to specific map information generated by the map generator 296 are identified, the wearable device 101 may determine a location corresponding to the specific map information as the current location of the wearable device 101. For example, when an image similar to the key frame stored by the map generator 296 is obtained from the camera 225, the wearable device 101 may determine a location corresponding to the key frame as the current location of the wearable device 101. The local map spaced apart from the current location may be removed from a volatile memory of the wearable device 101 or may be stored in a non-volatile memory.

Based on execution of the location and direction processor 293, the processor 210 of the wearable device 101 may compute the location and/or the direction of the wearable device 101. The wearable device 101 may compute the location and/or the direction of the wearable device 101 based on at least one of the information 292 including the feature point and/or the key frame and/or the information obtained by the reflector detector 295. For example, the wearable device 101 may compute the location and/or the direction of the wearable device 101 using information obtained by the location tracker 271. For example, based on the probabilities, that each of the feature points corresponds to the reflector, obtained from the reflector detector 295, the wearable device 101 may determine whether to use the feature points to compute the location and/or the direction of the wearable device 101. The wearable device 101 may update the information 292 including the feature point and the key frame, based on the location and/or the direction of the wearable device 101. For example, the wearable device 101 may cause the feature point corresponding to the reflector not to be used (e.g., not to be used for generating the map information) by the map generator 296.

Based on the execution of the location tracker 271, the wearable device 101 may obtain information used for execution of a software application (e.g., a software application included in the application layer 240). For example, the wearable device 101 identifying a preset API included in the software application may compute a location and/or a direction of the wearable device 101 requested by the API, by executing the location tracker 271. The API may include a parameter for requesting a location and/or a direction of the wearable device 101 at a specific timing. The software application may include instructions for repeatedly calling the preset API based on a preset period and/or frequency.

Based on a request called (or invoked) by the software application, the wearable device 101 may execute the location tracker 271. The request may be identified by the API. In order to identify a location and/or a direction of the wearable device 101 of a first timing corresponding to the request, the wearable device 101 may obtain information indicating a location and/or a direction at a second timing before the first timing. By combining the location and/or the direction at the second timing with sensor data (e.g., the sensor data obtained from the sensor 230) and images (e.g., the images obtained from the camera 225) in a time period between the second timing and the first timing, the wearable device 101 may compute the location and/or the direction of the wearable device 101 at the first timing. The wearable device 101 may call a function (or a callback function, a routine, a sub-routine and/or a method) of the software application indicated by the request based on the computed location and/or direction.

In an embodiment, the wearable device 101 may compute a location and/or a direction of the wearable device 101 at the timing by executing the location tracker 271 based on data (e.g., a timestamp) indicating a specific timing. The wearable device 101 may compute a location and/or a direction of the wearable device 101 based on sensor data accumulated in a time period including the specific timing.

The information obtained based on the execution of the location tracker 271 and used for the execution of the software application is not limited to the location and/or the direction of the wearable device 101 described above. The wearable device 101 may provide a virtual space mapped to the external space by executing a software application based on the map information identified based on the map generator 296. The map information may include a point cloud including one or more feature points identified from an image.

As described above, the wearable device 101 according to an embodiment may include system software (e.g., the location tracker 271) for obtaining information indicating the location and/or the direction of the wearable device 101, as information used to execute a software application of the wearable device 101. For example, by executing instructions of the software application to reproduce a virtual space based on the information, the wearable device 101 may display, on the display 220, at least a portion of the virtual space coupled to the external space. The wearable device 101 may identify a reflector (e.g., the reflector 130 of FIG. 1) included in the external space, by executing the location tracker 271 including the reflector detector 295. A result of identifying the reflector may be used to compensate for an error in a location and/or a direction of the wearable device 101 caused by recognition of an image including the reflector. Hereinafter, an exemplary operation of the wearable device 101 based on identification of the reflector will be described with reference to FIG. 3.

FIG. 3 illustrates an example of a flowchart of a wearable device according to an embodiment. The wearable device 101 of FIGS. 1, 2A, and 2B and/or the processor 210 of FIG. 2A may perform an operation described with reference to FIG. 3. At least one of operations of FIG. 3 may be associated with an operation of the wearable device executing the location tracker 271 of FIGS. 2A and/or 2B.

In the following embodiment, each of operations may be sequentially performed, but is not necessarily performed sequentially. For example, an order of each of operations may be changed, and at least two operations may be performed in parallel.

Referring to FIG. 3, in operation 310, a processor of the wearable device according to an embodiment may execute a head tracking function, in a state of being worn by a user. The processor may switch a state of the location tracker 271 of FIGS. 2A and/or 2B between an idle state or an active state, based on whether it is worn by the user (e.g., the user 110 of FIG. 1). For example, the processor identifying a motion of the wearable device based on a sensor (e.g., the sensor 230 of FIG. 2A) may switch the state of the location tracker 271 from the idle state to the active state. An embodiment is not limited thereto, and the wearable device including attachable straps may identify a connection of the straps based on a switching circuit included in the strap. The wearable device identifying the connection of the straps may perform the operation 310. For example, in a case of being worn by the user, the processor may initiate the execution of the head tracking function of the operation 310 by switching the state of the location tracker 271 to the active state.

Referring to FIG. 3, in operation 320, the processor of the wearable device according to an embodiment may detect a reflector (e.g., the reflector 130 of FIG. 1) based on an image of a camera. The camera of the operation 320 may include the camera 225 and/or the outward camera 225-2 of FIG. 2A. The processor may perform the operation 320 based on execution of the reflector detector 295 of FIG. 2B. The processor may perform the operation 320 based on a preset period or frequency. The operation 320 may be repeatedly (or periodically) performed, for example, based on a period and/or a duration greater than a duration required to identify a reflector from a specific image. For example, the period in which the operation 320 is repeatedly performed may be longer than a frame rate of the camera.

In an embodiment, the processor may repeatedly perform the operation 320 based on a dynamically changed period. For example, the processor may perform the operation 320 with respect to an image selected as a key frame at a timing when the key frame is selected among images sequentially outputted from the camera in a time domain. For example, the processor may perform the operation 320 based on the number of feature points in the image. For example, the period of repeatedly performing the operation 320 may be inversely proportional to the number of feature points extracted in the image. For example, the period of repeatedly performing the operation 320 may be changed based on whether the reflector has been detected based on the image. In a case that the reflector is not detected from the image during a preset duration, the processor may perform the operation 320 based on the relatively long period. When the reflector is identified, the processor may reduce the period of repeatedly performing the operation 320.

Referring to FIG. 3, in operation 330, the processor of the wearable device according to an embodiment may obtain information associated with a portion of the image associated with the reflector. The processor detecting the reflector based on the operation 320 may perform the operation 330. For example, the processor may obtain the information on the portion (or an area) associated with the reflector in the image. The information may include at least one of a timing (e.g., a timestamp) of identifying the reflector, a type (e.g., a class and/or a category) of the reflector identified based on the image, a size of the reflector, a location (e.g., a coordinate represented in a pixelwise) corresponding to the reflector in the image, or an identifier (e.g., an ID) for tracking the reflector. The information of the operation 330 may include a pixelwise value (e.g., a flag and/or a probability value) indicating at least a portion associated with the reflector in the image.

Referring to FIG. 3, in operation 340, the processor of the wearable device according to an embodiment may adjust an attribute of feature points extracted from an image based on information. The feature points of the operation 340 may be obtained based on the execution of the feature point extractor 294. The attribute may include a value (e.g., a flag and/or a probability value) indicating whether a corresponding feature point corresponds to reflected light of the reflector. The image of the operation 340 may correspond to the image of the operation 330. An embodiment is not limited thereto, and the image of the operation 340 may correspond to another image different from the image of the operation 330.

For example, the processor that sequentially obtains a plurality of images in a time domain from the camera may extract feature points from an image of a first timing. A second timing at which the extraction of the feature points from the image is completed may be different from a third timing at which a portion associated with the reflector is identified from the image. For example, the third timing may be a timing after the second timing. In the third timing, the processor may extract feature points from another image different from the image of the first timing. In an embodiment, the processor may identify or search for an image corresponding to the information of the operation 330 and/or feature points in the image, based on a timing of the image corresponding to the information, included in the information of the operation 330. The processor may change an attribute of each of the searched feature points, based on whether the corresponding feature point is associated with the reflector. The attribute may be included in the information 292 of FIG. 2B.

Referring to FIG. 3, in operation 350, the processor of the wearable device according to an embodiment may determine a location and/or a direction of the wearable device based on the attribute of the feature points. The processor may perform the operation 350 based on the execution of the location and direction processor 293 of FIG. 2B. The processor may perform the operation 350 by using information (e.g., the information associated with the feature points and/or the key frame of FIG. 2B) stored in memory.

In an embodiment, the processor may perform the operation 350 based on the execution of the map generator 296 of FIG. 2B. For example, based on the execution of the map generator 296, the processor may determine a revisitation. The revisitation may be determined based on whether a current location of the wearable device identified by the processor matches the location of the map information obtained by the map generator 296. In order to determine the revisitation, the processor may use remaining feature points excluding one or more feature points having the attribute associated with the reflector among a plurality of feature points. Based on the operation 350, the processor may perform an algorithm for determining the revisitation, such as loop closing. The processor performing the loop closing may not use, for the loop closing, at least one feature point indicated as being associated with the reflector based on the operation 340.

The location and/or the direction of the wearable device determined based on the operation 350 may be provided to a software application executed by the wearable device 101. The processor may provide the location and/or the direction of the operation 350 to the software application. The processor may display at least a portion of a virtual space associated with the location and/or the direction by executing the software application based on the location and/or the direction. Since the location and/or the direction of the wearable device is determined based on feature points having an attribute adjusted based on the reflector, the processor may more accurately determine the location and/or the direction.

Hereinafter, an exemplary operation of the wearable device detecting the reflector from the image based on the operation 320 will be described with reference to FIG. 4.

FIG. 4 illustrates an example of an operation of a wearable device 101 for identifying a portion 430 associated with a reflector in an image 140. The wearable device 101 of FIGS. 1, 2A, and 2B and/or the processor 210 of FIG. 2A may perform an operation of the wearable device 101 described with reference to FIG. 4.

According to an embodiment, the wearable device 101 may obtain the image 140 from a camera 225 (e.g., the outward camera 225-2 of FIG. 2A). The wearable device 101 may execute a function for processing the image 140 based on a location tracker 271. For example, the wearable device 101 may perform an operation for identifying the portion 430 of the image 140 corresponding to the reflector based on a reflector detector 295.

Referring to FIG. 4, a neural network 410 for detecting the reflector may be provided as a portion of the location tracker 271. The neural network 410 may include a set of a plurality of parameters for defining nodes included in a plurality of layers of an artificial neural network and weights (or filters) between the nodes. The wearable device 101 may include software, hardware, or a combination thereof for operating the neural network 410. The software for operating the neural network 410 may include one or more programs for performing computations associated with the plurality of parameters and/or a set of instructions (e.g., a library) called by the one or more programs. The hardware for operating the neural network 410 may include a CPU, a GPU, a neural processing unit (NPU), or a combination thereof.

Referring to FIG. 4, by using the neural network 410 to which the image 140 is inputted, the wearable device 101 may identify a location of the portion 430 associated with the reflector in the image 140. From the neural network 410 to which the image 140 is inputted, the wearable device 101 may obtain reflector information 420. The reflector information 420 may include data indicating the location and/or a size of the portion 430 corresponding to the reflector in the image 140. Referring to FIG. 4, in the image 140 including a visual object 143 corresponding to a reflector (e.g., the reflector 130 of FIG. 1), the wearable device 101 may identify the portion 430 corresponding to a surface of the reflector. Reflected light reflected from the reflector may be captured in the portion 430 of the image 140. The portion 430 in the image 140 identified based on the neural network 410 may correspond to or include, in the visual object 143 corresponding to a mirror, a material (e.g., glass, metal and/or an organic compound such as acrylic) wrapped by a frame of the mirror.

The reflector information 420 generated based on execution of the reflector detector 295 may be stored in memory (e.g., the memory 215 of FIG. 2A) of the wearable device 101. The reflector information 420 may be stored in conjunction with the image 140. The reflector information 420 may be used to determine whether feature points included in the image 140 are associated with the reflector. For example, among the feature points included in image 140, one or more feature points included in the portion 430 identified by the reflector information 420 may have an attribute indicating that it is associated with the reflector. Within the example, a feature point included in another portion of the image 140 distinct from the portion 430 may have an attribute indicating that it is not associated with the reflector (or an attribute indicating that it is associated with an object different from the reflector).

In an embodiment, the size and/or the location of the portion 430 indicated by the reflector information 420 may be used to determine whether the feature point of the image 140 included in the portion 430 is used to identify a location of the wearable device 101. For example, in a case that a ratio of the size of the portion 430 in the image 140 is greater than a preset ratio, the wearable device 101 may use the feature points located in the portion 430 to compute the location of the wearable device 101. For example, in a case that the ratio of the size of the portion 430 in the image 140 is less than the preset ratio, the wearable device 101 may discard the feature points located in the portion 430 or may not use it to compute the location of the wearable device 101.

As described above, the wearable device 101 according to an embodiment may identify the portion 430 associated with the reflector from the image 140, by using the neural network 410 provided with the location tracker 271. The reflector information 420 obtained by the wearable device 101 may include data indicating the size, the location, and/or a shape of the portion 430. The wearable device 101 identifying the portion 430 may obtain information (e.g., the attribute of the operation 340 of FIG. 3) indicating whether each of the feature points included in the image 140 is included in the portion 430. The wearable device 101 may use the reflector information 420 corresponding to the image 140 for head tracking based on the image 140.

Hereinafter, an exemplary operation of the wearable device 101 performing head tracking based on images obtained sequentially in a time domain will be described with reference to FIGS. 5A and/or 5B.

FIGS. 5A and 5B illustrate an example of an operation of a wearable device 101 for identifying portions associated with a reflector in each of sequentially obtained images 521, 522, 523, and 524. The wearable device 101 of FIGS. 1, 2A, and 2B and/or the processor 210 of FIG. 2A may perform an operation of the wearable device 101 described with reference to FIGS. 5A and/or 5B.

Referring to FIGS. 5A and/or 5B, an exemplary environment of the wearable device 101 worn by a user 110 adjacent to a reflector 510 (e.g., a mirror having a rectangular shape) is illustrated. Referring to an exemplary case of FIG. 5A, directions dh1, dh2, dh3, and dh4 viewed by the user 110, moving along a path connecting locations ph1, ph2, ph3, and ph4, from each of the locations ph1, ph2, ph3, and ph4 are illustrated. Referring to FIG. 5A, the images 521, 522, 523, and 524 obtained from a camera (e.g., the camera 225 and/or the outward camera 225-2 of FIG. 2A) of the wearable device 101 while a direction of a head gradually changes from the direction dh1 to the direction dh4 are illustrated.

The image 521 obtained at a t1 timing in which the user 110 of the location ph1 looks in the direction dh1 may include a portion 512 corresponding to the reflector 510. The wearable device 101 may extract one or more feature points from the image 521. At a t1+a timing, an operation of obtaining the one or more feature points corresponding to the image 521 may be completed. An image 531 of FIG. 5A may be an exemplary image displaying the one or more feature points on the image 521 to describe the one or more feature points (e.g., marks in a form of a quadrangle and/or a triangle) extracted from the image 521.

The image 522 obtained at a t2 timing in which the user 110 of the location ph2 looks in the direction dh2 may include a portion 512 corresponding to the reflector 510. A shape of the portion 512 may be different from that of the portion 512 of the image 521 which was obtained at the t1 timing. At a t2+b timing after the t2 timing, the wearable device 101 may obtain feature points from the image 522. An image 532 may be an exemplary image to describe a relationship between the image 522 and the feature points obtained from the image 522.

The image 523 obtained at a t3 timing in which the user 110 of the location ph3 looks in the direction dh3 may include a portion 512 corresponding to the reflector 510. At a t3 + c timing after the t3 timing, the wearable device 101 may obtain feature points from the image 523. An image 533 may be an exemplary image to describe a relationship between the image 523 and the feature points obtained from the image 523.

The image 524 obtained at a t4 timing at which the user 110 of the location ph4 looks in the direction dh4 may include a portion 512 corresponding to the reflector 510. At a t4 + d timing after the t4 timing, the wearable device 101 may obtain feature points from the image 524. An image 534 may be an exemplary image to describe a relationship between the image 524 and the feature points obtained from the image 524.

The wearable device 101 may identify at least one feature point commonly included in the different images 531, 532, 533, and 534 by comparing feature points illustrated based on the images 531, 532, 533, and 534. For example, the wearable device 101 may check or identify a feature point included in all of the images 531 and 532, by comparing feature points of each of the images 531 and 532. The wearable device 101 identifying the feature point included in all of the images 531 and 532 may compute three-dimensional spatial coordinates corresponding to the feature point, based on a change in locations of the feature point in the images 531 and 532. Based on the three-dimensional spatial coordinates (or a change in the three-dimensional spatial coordinates), the wearable device 101 may compute or identify a current location and/or a current direction of the wearable device 101.

A timing in which the wearable device 101 extracts feature points from a specific image (e.g., any one of the images 521, 522, 523, and 524) and a timing in which the wearable device 101 identifies a portion associated with the reflector may be independent of each other. Referring to FIGS. 5A and/or 5B, a duration (e.g., a, b, c, and d) for extracting feature points from each of the images 521, 522, 523, and 524 may be shorter than an interval (e.g., t2-t1) between timings in which each of the images 521, 522, 523, and 524 is obtained.

Referring to FIG. 5B, the wearable device 101 may identify the portion 512 associated with the reflector 510 in the image 521 of the t1 timing at a t1 + x timing in which extraction of feature points with respect to the images 521, 522, and 523 of the t1, t2, and t3 timings is completed. For example, the wearable device 101 may identify an area 551 surrounding feature points corresponding to the portion 512 among feature points of the image 521. Among the feature points of the image 521, feature points associated with the reflector may be positioned inside the area 551. The area 551 may have a polygonal shape connecting feature points (e.g., a feature point f1) adjacent to the portion 512 associated with the reflector 510.

Referring to FIG. 5B, a duration (e.g., x) of identifying the portion 512 associated with the reflector in the image 521 may be longer than the interval (e.g., t2-t1) between the timings in which each of the images 521, 522, 523, and 524 is obtained. For example, before the t1 + x timing in which the wearable device 101 identifies the portion associated with the reflector from the image 521, the wearable device 101 may obtain the images 522 and 523 after the image 521. Since reflector detection with respect to the image 521 is performed until the t1 + x timing, reflector detection with respect to the images 522 and 523 obtained before the t1 + x timing may be delayed. Since a duration for reflector detection is relatively long, the delay may be increased as the wearable device 101 continuously obtains the images 521, 522, 523, and 524.

According to an embodiment, the wearable device 101 may identify areas 552, 553, and 554 associated with the reflector in the other images 522, 523, and 524, based on the area 551 in the image 521 obtained at the t1 + x timing and/or one or more feature points for distinguishing the area 551. The wearable device 101 may assign an identifier (ID) to each of feature points of each of the images 521, 522, 523, and 524. A feature point commonly included in at least two images among the images 521, 522, 523, and 524 may have the same identifier in the two images. For example, the feature point f1 commonly included in all of the images 521, 522, 523, and 524 may have an identifier matched in all of the images 521, 522, 523, and 524 by the wearable device 101. For example, a feature point f4 commonly included in all of the images 522, 523, and 524 may have an identifier matched in all of the images 522, 523, and 524. For example, identifiers assigned to the feature points included in the image 521 may be different from the identifier assigned to the feature point f4.

The wearable device 101 identifying, in the image 521, the area 551 for distinguishing feature points associated with the reflector may check or identify an area corresponding to the reflector in another image, by using identifiers of feature points (e.g., the feature point f1) on a boundary line of the area 551. For example, by searching, in the image 522, for feature points having the identifiers of feature points (e.g., the feature point f1) on the boundary line of the area 551, the wearable device 101 may extract the area 552 in the image 522 for distinguishing feature points associated with the reflector. In the image 522, since a feature point f2 and a feature point f3 that were not extracted from the image 521 are included in the area 552, they may be determined to be associated with the reflector.

For example, by searching, in the image 523, for feature points corresponding to feature points on the boundary line of the area 551, the wearable device 101 may identify the area 553 in the image 523 for distinguishing feature points associated with the reflector. The feature point f2, the feature point f3, a feature point f5, and a feature point f6 included in the area 553 may be determined to be associated with the reflector.

Similarly, the wearable device 101 may identify the area 554 for distinguishing feature points associated with the reflector, based on feature points in the image 524 matched to feature points on the boundary line of the area 551. For example, in the image 524, the feature point f4 outside the area 554 may be determined not to be associated with the reflector, and the feature point f2 and the feature point f3 inside the area 554 may be determined to be associated with the reflector.

As described above, by comparing feature points of the images 521, 522, 523, and 524 sequentially obtained in a time domain, the wearable device 101 may identify or determine the areas 552, 553, and 554 in the other images 522, 523, and 524 matched to the area 551 associated with the reflector in the specific image 521. For example, feature points for distinguishing the areas 551, 552, 553, and 554 (e.g., a feature point positioned on a boundary line of the areas 551, 552, 553, and 554, such as the feature point f1) may have an identifier matched in each of the images 521, 522, 523, and 524. Based on continuity of an identifier of the feature points, the wearable device 101 may identify a change in the portion 512 associated with the reflector in the images 521, 522, 523, and 524.

The wearable device 101 may compute three-dimensional spatial coordinates of each of feature points extracted from the images 521, 522, 523, and 524. The wearable device 101 may compute three-dimensional spatial coordinates of each of the feature points based on whether each of the feature points is associated with the reflector. For example, in a case that a feature point is associated with the reflector, the wearable device 101 may compensate for a reprojection error of the feature point due to an optical path of reflected light. An embodiment is not limited thereto, and among feature points in an image (e.g., the images 521, 522, 523, and 524), the wearable device 101 may preferentially compute three-dimensional spatial coordinates of another feature point different from a feature point associated with the reflector or may bypass computation of three-dimensional spatial coordinates with respect to the feature point associated with the reflector.

As described above, the wearable device 101 according to an embodiment may track the portion 512 associated with the reflector in each of the images 521, 522, 523, and 524, by using the feature points in the images 521, 522, 523, and 524 obtained from the camera. Based on a result of tracking the reflector, the wearable device 101 may compute a location and/or a direction of the wearable device 101 in an external space. Hereinafter, an operation of the wearable device 101 computing a location and/or a direction based on feature points will be described with reference to FIGS. 6A, 6B and/or 6C.

FIGS. 6A, 6B, and 6C illustrate an example of an operation of a wearable device 101 identifying a location of the wearable device 101 in an external space including a reflector. The wearable device 101 of FIGS. 1, 2A, and 2B and/or the processor 210 of FIG. 2A may perform an operation of the wearable device 101 described with reference to FIGS. 6A, 6B and/or 6C.

Referring to FIGS. 6A, 6B and/or 6C, different states 601, 602, and 603 distinguished by a movement of the wearable device 101 and/or a user 110 wearing the wearable device 101 are illustrated. Referring to FIG. 6A, the state 601 of the user 110 entering a first external space 611 along a path 619 and then moving to a point p1 outside the first external space 611 is illustrated. The first external space 611 and a second external space 612 next to the first external space 611 may be referred to as a room. In the state 601, the wearable device 101 may identify, from an image and/or a video obtained in the first external space 611, a feature point fx and/or a feature point fy. Diamond-shaped marks ◆ of FIG. 6A may represent three-dimensional locations of feature points extracted from the image and/or the video with respect to the first external space 611.

While worn by the user 110, the wearable device 101 may compute, track, or monitor a location and/or a direction of the wearable device 101 based on the execution of the location tracker 271 (or a head tracker) of FIGS. 2A and/or 2B. Feature points indicated by the diamond-shaped marks ◆ of FIG. 6A may be used to generate map information on the first external space 611. The map information corresponding to the first external space 611 may include feature points and/or key frames of the image and/or the video obtained in the first external space 611. The feature points included in the map information may be included in a point cloud with respect to the first external space 611. The point cloud with respect to the first external space 611 may be provided as a software application executed by the wearable device 101 based on a call of an API corresponding to the location tracker.

Referring to FIG. 6A, based on the image and/or the video obtained in the first external space 611, the wearable device 101 may determine that a reflector does not exist in the first external space 611.

Referring to FIG. 6B, the state 602 of the user 110 moving from the point p1, along a path 629, to a point p2 in the second external space 612 is illustrated. Based on an image and/or a video obtained in the state 602, the wearable device 101 may identify feature points corresponding to landmarks of the second external space 612. The triangular-shaped marks A and/or circularshaped marks ∘ of FIG. 6B may represent three-dimensional locations of the feature points extracted from the image and/or the video with respect to the second external space 612.

Referring to FIG. 6B, from the image and/or the video obtained in the second external space 612 including a reflector 621, the wearable device 101 may identify feature points associated with reflected light reflected by the reflector 621. Referring to FIG. 6B, in the reflector 621, as light with respect to a feature point f1, a feature point f2, a feature point f3, and a feature point f4 is reflected, the wearable device 101 may identify a feature point f1', a feature point f2', a feature point f3', and a feature point f4' respectively corresponding to the feature point f1, the feature point f2, the feature point f3, and the feature point f4. Referring to FIG. 6B, the feature point f1', the feature point f2', the feature point f3', and the feature point f4' based on the reflected light may be determined to be located beyond the reflector 621 with respect to the wearable device 101. According to an embodiment, the wearable device 101 may assign, to the feature points (e.g., the feature points f1', f2', f3', and f4' indicated by a mark ∘) associated with the reflected light, an attribute indicating that the feature point is associated with the reflected light and/or the reflector 621. The wearable device 101 may store the feature points (e.g., the feature points indicated by marks ▲ and ∘) obtained in the state 602 in map information associated with the second external space 612.

According to an embodiment, the wearable device 101 may compare the feature points (e.g., the feature points indicated by the marks ▲ and ∘) obtained in the state 602 with the feature points (e.g., the feature points indicated by the mark ◆) identified based on the first external space 611. For example, the wearable device 101 may compare the remaining feature points (e.g., the feature points f1, f2, f3, and f4 indicated by the mark ▲) excluding the feature points (e.g., the feature points f1', f2', f3', and f4' indicated by the mark ∘) corresponding to the reflected light of the reflector 621 with the feature points (e.g., the feature points indicated by the mark ◆) identified based on the first external space 611. Based on the comparison, the wearable device 101 may determine whether the user 110 has re-entered the first external space 611 (e.g., loop closing). Referring to FIG. 6B, since the feature points (e.g., the feature points indicated by the mark ◆) extracted from the image and/or the video in the state 602 are different from the feature points (e.g., the feature points indicated by the mark ◆) associated with the first external space 611, the wearable device 101 may determine that the user 110 has not re-entered the first external space 611.

As described above, according to an embodiment, the wearable device 101 may use each of feature points to compute the location and/or the direction of the wearable device 101 based on a location of the feature points (e.g., a depth of the feature point with respect to the wearable device 101), a size of the reflector 621 identified from the image, and/or whether the feature point is associated with the reflector 621.

Referring to FIG. 6C, the state 603 of the user 110 moved from the point p2, along a path 639, to a point p3 in the first external space 611 is illustrated. In the state 603, the wearable device 101 may identify re-entry of the user 110 with respect to the first external space 611 by searching for feature points (e.g., feature points indicated by marks ◆ and ∘) having a three-dimensional location corresponding to the first external space 611 in an image and/or a video. For example, the wearable device 101 may search, among the feature points indicated by marks ◆ and ∘, for remaining feature points excluding feature points (e.g., the feature points f1', f2', f3', and f4' indicated by the mark ∘) associated with the reflector 621 in an image and/or a video obtained from a camera (e.g., the camera 225 and/or the outward camera 225-2 of FIG. 2A).

For example, in a case that the feature point fx and/or the feature point fy are identified from the image and/or the video obtained in the state 603, the wearable device 101 may determine that the user 110 has re-entered the first external space 611. In a case of being determined that the user 110 has re-entered the first external space 611, the wearable device 101 may more accurately compute a location and/or a direction of the wearable device 101 in the first external space 611 based on a location of the feature point fx and/or the feature point fy identified in the image and/or the video. The wearable device 101 may compensate for an error in a location and/or a direction of the wearable device 101 that were computed in the first external space 611 in the past, based on the computed location and/or the direction. The compensation for the error may be performed based on backpropagation.

For example, since the feature points f1', f2', f3', and f4' included in the first external space 611 have an attribute indicated as being associated with the reflector 621, they may be excluded from a computation of the location and/or the direction of the wearable device 101 (e.g., loop closing). An embodiment is not limited thereto. In the first external space 611 different from the second external space 612 including the reflector 621, the wearable device 101 may exclude the feature points associated with the reflector 621 from the computation of the location and/or the direction of the wearable device 101.

In the second external space 612 including the reflector 621, the wearable device 101 may compute the location and/or the direction of the wearable device 101 by using the feature points associated with the reflector 621. For example, the feature points f1', f2', f3', and f4' indicated as being associated with the reflector 621 may be used to more accurately determine a location of the wearable device 101 with respect to the reflector 621 in the second external space 612. For example, in order to reduce an errors in the location and/or the direction of wearable device 101 computed using remaining feature points (e.g., the feature points indicated by the mark ▲) excluding the feature points f1', f2', f3', and f4' associated with the reflector 621, the wearable device 101 may utilize the feature points f1', f2', f3', and f4' associated with the reflector 621.

In an embodiment, in a state of excluding a feature point (e.g., the feature points f1', f2', f3', and f4' indicated by the mark ∘) associated with the reflector 621 and having three-dimensional locations in the first external space 611, the wearable device 101 may perform first loop closing. Based on the first loop closing, the wearable device 101 may search for the feature points indicated by the mark ◆ among the feature points indicated by the marks ◆ and ∘ in the image and/or the video obtained from the camera. Based on the search, the wearable device 101 may determine whether the user 110 re-enters the first external space 611.

The wearable device 101 performing the first loop closing may perform second loop closing based on the feature point associated with the reflector 621 and having three-dimensional locations in the first external space 611. Based on the second loop closing, the wearable device 101 may search for the feature points indicated by the marks ◆ and ∘ in the image and/or the video obtained from the camera. Based on the search, the wearable device 101 may determine whether the user 110 re-enters the first external space 611. Based on the first loop closing and/or the second loop closing, the wearable device 101 may more accurately determine a location of the user 110. For example, in a case that the location of the user 110 is not determined based on the second loop closing, the wearable device 101 may determine the location of the user 110 based on the first loop closing. Failure to determine the location of the user 110 based on the loop closing may include a case of searching for less than a certain number and/or a certain ratio of feature points from the image and/or the video.

In an embodiment, based on a priority of the feature point (e.g., the feature points fl', f2', f3', and f4' indicated by the mark ∘) associated with the reflector 621,the wearable device 101 may use the feature point to compute the location and/or the direction of the wearable device 101. The priority may be associated with the number of times the feature point is extracted from images obtained at different timings. For example, as the number of times increases, the feature point may have a relatively higher priority. The wearable device 101 may use the feature point having the relatively high priority to compute the location and/or the direction of the wearable device 101.

In an embodiment, the wearable device 101 may use the feature point associated with the reflector 621 to compute the location and/or the direction of the wearable device 101, based on a shape and/or a reflection characteristic of the reflector 621. For example, in a case that the reflection characteristic of the reflector 621 is not uniform, and/or the reflector 621 has a curved shape, the wearable device 101 may not use the feature point associated with the reflector 621 to compute the location and/or the direction of the wearable device 101. For example, the nonuniform reflection characteristic and/or the curved shape of the reflector 621 may cause distortion of a portion corresponding to the reflector 621 in an image obtained by the wearable device 101. The wearable device 101 may discard or ignore a feature point or bypass a computation based on the feature point so that the feature point extracted in the distorted portion is not used to compute the location and/or the direction of the wearable device 101. The shape and/or the reflection characteristic of the reflector 621 may be included in the reflector information 420 obtained based on the neural network 410 of FIG. 4.

In an embodiment, the wearable device 101 may use the feature point to compute the location and/or the direction of the wearable device 101 based on the three-dimensional location of the feature point associated with the reflector 621. For example, in a case that a depth of the feature point (or a distance of the feature point with respect to the reflector 621) is greater than a threshold distance, the wearable device 101 may use other feature points (e.g., feature points not associated with the reflector 621) excluding the feature point to compute the location and/or the direction of the wearable device 101, and may not use the feature point to compute the location and/or the direction of the wearable device 101.

As described above, according to an embodiment, the wearable device 101 may identify the location and/or the direction of the wearable device 101 using an image and/or a video obtained at a specific time point. The wearable device 101 may obtain an image and/or a video from the camera to compute the location and/or the direction of the wearable device 101 independently of an error of a sensor (e.g., a GPS sensor and/or an IMU) gradually increased in a time domain. The wearable device 101 may identify, in the image and/or the video, at least a portion associated with the reflector 621. By using the at least a portion, the wearable device 101 may reduce an error in the location and/or the direction of the wearable device 101 caused by the reflector 621.

As described above, the wearable device 101 according to an embodiment may identify an external space including the wearable device 101 among the first external space 611 and/or the second external space 612, based on feature points of the image obtained using the camera. Based on identifying the location of the wearable device 101 included in the first external space 611 next to the second external space 612 including the reflector 621, the wearable device 101 may obtain information associated with the first external space 611 (e.g., the location and/or the direction of the wearable device 101 in the first external space 611), based on another feature point (e.g., the feature points indicated by the mark ◆) different from the feature point (e.g., the feature points indicated by the mark ∘) associated with the reflector 621 among feature points (e.g., the feature points indicated by the marks ◆ and ∘ ) having a coordinate value corresponding to the first external space 611.

Based on identifying the location of the wearable device 101 included in the second external space 612, the wearable device 101 may obtain information associated with the second external space 612 (e.g., the location and/or the direction of the wearable device 101 in the second external space 612), by using feature points (e.g., the feature points indicated by the mark A) having a coordinate value corresponding to the second external space 612. While located in the second external space 612 including the reflector 621, the wearable device 101 may compute or identify the location and/or the direction of the wearable device 101 in the second external space 612, by using the feature point (e.g., the feature points indicated by the mark ∘) associated with reflector 621.

Hereinafter, a UI displayed by the wearable device 101 identifying the reflector 621 will be exemplarily described with reference to FIG. 7.

FIG. 7 illustrates an example of a user interface (UI) displayed by a wearable device 101 identifying a reflector 130. The wearable device 101 of FIGS. 1, 2A, and 2B and/or the processor 210 of FIG. 2A may perform an operation of the wearable device 101 described with reference to FIG. 7.

According to an embodiment, the wearable device 101 may display a screen 710 including an image and/or a video obtained from a camera (e.g., the camera 225 and/or the outward camera 225-2 of FIG. 2A). The screen 710 may be displayed on a display (e.g., the display 220 of FIG. 2A) of the wearable device 101 based on execution of a software application based on AR, MR and/or VST. In the screen 710, the wearable device 101 may display a virtual object 720 together with visual objects 141, 142, 143, and 144 corresponding to an external object. The virtual object 720 may have a three-dimensional location mapped to an external space visible through the screen 710. For example, the wearable device 101 may provide a visual effect floating in the external space based on a movement and/or a rotation of the virtual object 720 in the screen 710.

The wearable device 101 may identify a reflector 130 adjacent to the wearable device 101 based on the image and/or the video obtained from the camera. The wearable device 101 identifying a portion associated with the reflector 130 in the image may display a visual object for verifying the reflector 130 on the display of the wearable device 101. In the exemplary screen 710 of FIG. 7, the wearable device 101 may highlight a portion 732 corresponding to the reflector 130, by using a visual object having a shape of a line and/or a figure. The wearable device 101 may display a virtual object 730 for notifying the identification of the reflector 130. The virtual object 730 may include preset text (e.g., "reflector detection") indicating the identification of the reflector 130.

In an embodiment, in a case of recognizing or identifying the reflector 130 is in an image, the wearable device 101 may determine whether to display the virtual object 730 based on the number of feature points of a second portion (e.g., a portion adjacent to a first portion) different from the first portion corresponding to the reflector 130 in the image. For example, in a case of extracting feature points greater than a preset number in the second portion, the wearable device 101 may not display the virtual object 730. In the example, in a case of extracting feature points less than the preset number in the second portion, the wearable device 101 may display the virtual object 730. For example, in a case of extracting feature points less than the preset number in the second portion during a preset duration, the wearable device 101 may display the virtual object 730. In the example, in a case of extracting the feature points greater than the preset number in the second portion, the wearable device 101 may not display the virtual object 730.

The wearable device 101 identifying the reflector 130 may perform an operation for additionally obtaining information associated with the reflector 130. For example, the wearable device 101 may guide obtaining an image and/or a video of an external space adjacent to the reflector 130, based on the virtual object 730. For example, the wearable device 101 may guide a user 110 wearing the wearable device 101 to move to a location adjacent to the reflector 130. Based on the operation, the wearable device 101 may additionally obtain feature points associated with the reflector 130 and/or the external space adjacent to the reflector 130. The feature points additionally obtained by the wearable device 101 may be used to more accurately generate map information on an external space including the reflector 130.

In an exemplary state of identifying the reflector 130, the wearable device 101 may provide a user experience based on the reflector 130. For example, the wearable device 101 may provide a function associated with the virtual object 720 by using the visual object 143 corresponding to the reflector 130 and/or the portion 732 in the screen 710. For example, the wearable device 101 may provide a visual effect, such as the virtual object 720 being attached on the visual object 143, based on a distance between the visual object 143 and the virtual object 720. While the virtual object 720 and the visual object 143 are connected to each other, the wearable device 101 may move the virtual object 720 on the visual object 143 based on a virtual friction coefficient associated with the reflector 130. For example, on the visual object 143, the virtual object 720 may slide at relatively high speed. An embodiment is not limited thereto, and the wearable device 101 may execute a function of replicating the virtual object 720 based on the contact between the visual object 143 and the virtual object 720.

For example, the wearable device 101 may display, in the portion 732 in the screen 710 associated with the reflector 130, a mirror image corresponding to the virtual object 720. Based on the mirror image displayed in the portion 732, the wearable device 101 may provide a visual effect, such as the virtual object 720 being reflected on the reflector 130.

As described above, the wearable device 101 according to an embodiment may identify the reflector 130 in the external space. Based on a result of identifying the reflector 130, the wearable device 101 may prevent deterioration of location tracking (e.g., head tracking) performance by the reflector 130. For example, the wearable device 101 may improve the location tracking performance by using a feature point associated with reflected light of the reflector 130. The wearable device 101 may use a portion 732 obtained from an image at a specific timing to identify a portion 732 corresponding to the reflector 130 from an image at a different timing, by considering an amount of computation required to identify the portion 732 corresponding to the reflector 130 (e.g., an amount of computation for operating the neural network 410 of FIG. 4).

Hereinafter, an exemplary operation of the wearable device 101 according to an embodiment will be described with reference to FIG. 8.

FIG. 8 illustrates an example of a flowchart of a wearable device according to an embodiment. The wearable device 101 of FIGS. 1, 2A, and 2B and/or the processor 210 of FIG. 2A may perform an operation described with reference to FIG. 8. At least one of operations of FIG. 8 may be associated with the operation of the wearable device executing the location tracker 271 of FIGS. 2A and/or 2B. The operation of FIG. 8 may be associated with the operation of FIG. 3.

In the following embodiment, each of operations may be sequentially performed, but is not necessarily performed sequentially. For example, an order of each of the operations may be changed, and at least two operations may be performed in parallel.

Referring to FIG. 8, in operation 810, a processor of the wearable device according to an embodiment may obtain an image (e.g., the images 140 and 150 of FIG. 1 and/or the images 521, 522, 523, and 524 of FIG. 5A) with respect to an external space using a camera (e.g., the camera 225 and/or the outward camera 225-2 of FIG. 2A).

Referring to FIG. 8, in operation 820, the processor of the wearable device according to an embodiment may identify whether at least a portion of the image of the operation 810 is associated with a reflector (e.g., the reflector 130 of FIG. 1, the reflector 510 of FIG. 5A, and/or the reflector 621 of FIGS. 6A to 6C) that reflects light. Based on the execution of the reflector detector 295 of FIGS. 2B and/or 4, the processor may identify a portion (e.g., the portion 430 of FIG. 4, the portion 512 of FIGS. 5A to 5B, and/or the portion 732 of FIG. 7) associated with the reflector in the image. In a state in which the at least a portion of the image associated with the reflector of the operation 820 is identified (820-YES), the processor of the wearable device may perform operation 830. In a state in which the at least a portion of the image associated with the reflector of the operation 820 is not identified (820-NO), the processor of the wearable device may perform operation 840.

Referring to FIG. 8, in the operation 830, the processor of the wearable device according to an embodiment may obtain information indicating whether each of feature points of the image is included in the at least a portion of the image associated with the reflector. The information in the operation 830 may include attributes of each of the feature points. The information may include a logical value (e.g., a boolean data type), a flag, and/or a probability value indicating whether a feature point corresponds to the reflector.

Referring to FIG. 8, in the operation 840, the processor of the wearable device according to an embodiment may recognize an external space based on the feature points of the image. The processor may identify a shape of the external space and/or one or more external objects included in the external space, based on three-dimensional locations of the feature points. The processor may generate or obtain information indicating the external space, based on the operation 840. A result of recognizing the external space may include map information (and/or a local map) corresponding to the external space.

Referring to FIG. 8, in operation 850, the processor of the wearable device according to an embodiment may provide a virtual space at least partially mapped to the external space based on the result of recognizing the external space. The processor may execute instructions for providing the virtual space, included in a software application (e.g., a software application included in the application layer 240 of FIG. 2A) installed in the wearable device. By executing the instructions based on the result of recognizing the external space of the operation 840, the processor may obtain the virtual space at least partially mapped to the external space. The processor may display at least a portion of the obtained virtual space on a display (e.g., the display 220 of FIG. 2A).

Hereinafter, an exemplary exterior of the wearable device described with reference to FIGS. 1 to 8 is illustrated with reference to FIGS. 9A, 9B, 10A and/or 10B. A wearable device 900 of FIGS. 9A and/or 9B and/or a wearable device 1000 of FIGS. 10A and/or 10B may be an example of the wearable device 101 of FIG. 1.

FIG. 9A illustrates an example of a perspective view of a wearable device according to an embodiment. According to an embodiment, a wearable device 900 may have a form of glasses that is wearable on a body part (e.g., head) of a user. The wearable device 900 may include a head-mounted display (HMD). For example, a housing of the wearable device 900 may include a flexible material such as rubber and/or silicone having a form closely attached to a portion of the user's head (for example, a portion of a face surrounding two eyes). For example, the housing of the wearable device 900 may include one or more straps able to be twined around the user's head, and/or one or more temples attachable to ears of the head.

Referring to FIG. 9A, according to an embodiment, the wearable device 900 may include at least one display 950 and a frame 909 supporting the at least one display 950.

According to an embodiment, the wearable device 900 may be wearable on a portion of the user's body. The wearable device 900 may provide augmented reality (AR), virtual reality (VR), or mixed reality (MR) combining the augmented reality and the virtual reality to a user wearing the wearable device 900. For example, the wearable device 900 may display a virtual reality image provided from at least one optical device 982 and 984 of FIG. 9B on at least one display 950, in response to a user's preset gesture obtained through a motion recognition camera 960-2 and 960-3 of FIG. 9B.

According to an embodiment, the at least one display 950 may provide visual information to a user. For example, the at least one display 950 may include a transparent or translucent lens. The at least one display 950 may include a first display 950-1 and/or a second display 950-2 spaced apart from the first display 950-1. For example, the first display 950-1 and the second display 950-2 may be disposed at positions corresponding to the user's left and right eyes, respectively.

Referring to FIG. 9B, the at least one display 950 may provide visual information transmitted through a lens included in the at least one display 950 from ambient light to a user and other visual information distinguished from the visual information9. The lens may be formed based on at least one of a fresnel lens, a pancake lens, or a multi-channel lens. For example, the at least one display 950 may include a first surface 931 and a second surface 932 opposite to the first surface 931. A display area may be formed on the second surface 932 of at least one display 950. When the user wears the wearable device 900, ambient light may be transmitted to the user by being incident on the first surface 931 and being penetrated through the second surface 932. For another example, the at least one display 950 may display an augmented reality image in which a virtual reality image provided by the at least one optical device 982 and 984 is combined with a reality screen transmitted through ambient light, on a display area formed on the second surface 932.

In an embodiment, the at least one display 950 may include at least one waveguide 933 and 934 that transmits light transmitted from the at least one optical device 982 and 984 by diffracting to the user. The at least one waveguide 933 and 934 may be formed based on at least one of glass, plastic, or polymer. A nano pattern may be formed on at least a portion of the outside or inside of the at least one waveguide 933 and 934. The nano pattern may be formed based on a grating structure having a polygonal or curved shape. Light incident to an end of the at least one waveguide 933 and 934 may be propagated to another end of the at least one waveguide 933 and 934 by the nano pattern. The at least one waveguide 933 and 934 may include at least one of at least one diffraction element (e.g., a diffractive optical element (DOE), a holographic optical element (HOE)), and a reflection element (e.g., a reflection mirror). For example, the at least one waveguide 933 and 934 may be disposed in the wearable device 900 to guide a screen displayed by the at least one display 950 to the user's eyes. For example, the screen may be transmitted to the user's eyes based on total internal reflection (TIR) generated in the at least one waveguide 933 and 934.

The wearable device 900 may analyze an object included in a real image collected through a photographing camera 960-4, combine with a virtual object corresponding to an object that becomes a subject of augmented reality provision among the analyzed object, and display on the at least one display 950. The virtual object may include at least one of text and images for various information associated with the object included in the real image. The wearable device 900 may analyze the object based on a multi-camera such as a stereo camera. For the object analysis, the wearable device 900 may execute space recognition (e.g., simultaneous localization and mapping (SLAM)) using the multi-camera and/or time-of-flight (ToF). The user wearing the wearable device 900 may watch an image displayed on the at least one display 950.

According to an embodiment, a frame 909 may be configured with a physical structure in which the wearable device 900 may be worn on the user's body. According to an embodiment, the frame 909 may be configured so that when the user wears the wearable device 900, the first display 950-1 and the second display 950-2 may be positioned corresponding to the user's left and right eyes. The frame 909 may support the at least one display 950. For example, the frame 909 may support the first display 950-1 and the second display 950-2 to be positioned at positions corresponding to the user's left and right eyes.

Referring to FIG. 9A, according to an embodiment, the frame 909 may include an area 920 at least partially in contact with the portion of the user's body in case that the user wears the wearable device 900. For example, the area 920 of the frame 909 in contact with the portion of the user's body may include an area in contact with a portion of the user's nose, a portion of the user's ear, and a portion of the side of the user's face that the wearable device 900 contacts. According to an embodiment, the frame 909 may include a nose pad 910 that is contacted on the portion of the user's body. When the wearable device 900 is worn by the user, the nose pad 910 may be contacted on the portion of the user's nose. The frame 909 may include a first temple 904 and a second temple 905, which are contacted on another portion of the user's body that is distinct from the portion of the user's body.

For example, the frame 909 may include a first rim 901 surrounding at least a portion of the first display 950-1, a second rim 902 surrounding at least a portion of the second display 950-2, a bridge 903 disposed between the first rim 901 and the second rim 902, a first pad 911 disposed along a portion of the edge of the first rim 901 from one end of the bridge 903, a second pad 912 disposed along a portion of the edge of the second rim 902 from the other end of the bridge 903, the first temple 904 extending from the first rim 901 and fixed to a portion of the wearer's ear, and the second temple 905 extending from the second rim 902 and fixed to a portion of the ear opposite to the ear. The first pad 911 and the second pad 912 may be in contact with the portion of the user's nose, and the first temple 904 and the second temple 905 may be in contact with a portion of the user's face and the portion of the user's ear. The temple 904 or 905 may be rotatably connected to the rim through hinge units 906 and 907 of FIG. 9B. The first temple 904 may be rotatably connected with respect to the first rim 901 through the first hinge unit 906 disposed between the first rim 901 and the first temple 904. The second temple 905 may be rotatably connected with respect to the second rim 902 through the second hinge unit 907 disposed between the second rim 902 and the second temple 905. According to an embodiment, the wearable device 900 may identify an external object (e.g., a user's fingertip) touching the frame 909 and/or a gesture performed by the external object by using a touch sensor, a grip sensor, and/or a proximity sensor formed on at least a portion of the surface of the frame 909.

According to an embodiment, the wearable device 900 may include hardware (e.g., hardware described above based on the block diagram of FIGS. 2A, 2B, and/or 4) that performs various functions. For example, the hardware may include a battery module 970, an antenna module 975, the at least one optical device 982 and 984, speakers (e.g., speakers 955-1 and 955-2), a microphone (e.g., microphones 965-1, 965-2, and 965-3), a light emitting module (not illustrated), and/or a printed circuit board (PCB) 990 (e.g., printed circuit board). Various hardware may be disposed in the frame 909.

According to an embodiment, the microphone (e.g., the microphones 965-1, 965-2, and 965-3) of the wearable device 900 may obtain a sound signal, by being disposed on at least a portion of the frame 909. The first microphone 965-1 disposed on the bridge 903, the second microphone 965-2 disposed on the second rim 902, and the third microphone 965-3 disposed on the first rim 901 are illustrated in FIG. 9B, but the number and disposition of the microphone 965 are not limited to an embodiment of FIG. 9B. In case that the number of the microphone 965 included in the wearable device 900 is two or more, the wearable device 900 may identify a direction of the sound signal by using a plurality of microphones disposed on different portions of the frame 909.

According to an embodiment, the at least one optical device 982 and 984 may project a virtual object on the at least one display 950 in order to provide various image information to the user. For example, the at least one optical device 982 and 984 may be a projector. The at least one optical device 982 and 984 may be disposed adjacent to the at least one display 950 or may be included in the at least one display 950 as a portion of the at least one display 950. According to an embodiment, the wearable device 900 may include a first optical device 982 corresponding to the first display 950-1, and a second optical device 984 corresponding to the second display 950-2. For example, the at least one optical device 982 and 984 may include the first optical device 982 disposed at a periphery of the first display 950-1 and the second optical device 984 disposed at a periphery of the second display 950-2. The first optical device 982 may transmit light to the first waveguide 933 disposed on the first display 950-1, and the second optical device 984 may transmit light to the second waveguide 934 disposed on the second display 950-2.

In an embodiment, a camera 960 may include the photographing camera 960-4, an eye tracking camera (ET CAM) 960-1, and/or the motion recognition camera 960-2 and 906-3. The photographing camera 960-4, the eye tracking camera 960-1, and the motion recognition camera 960-2 and 960-3 may be disposed at different positions on the frame 909 and may perform different functions. The eye tracking camera 960-1 may output data indicating a position of eye or a gaze of the user wearing the wearable device 900. For example, the wearable device 900 may detect the gaze from an image including the user's pupil obtained through the eye tracking camera 960-1.

The wearable device 900 may identify an object (e.g., a real object, and/or a virtual object) focused by the user, by using the user's gaze obtained through the eye tracking camera 960-1. The wearable device 900 identifying the focused object may execute a function (e.g., gaze interaction) for interaction between the user and the focused object. The wearable device 900 may represent a portion corresponding to eye of an avatar indicating the user in the virtual space, by using the user's gaze obtained through the eye tracking camera 960-1. The wearable device 900 may render an image (or a screen) displayed on the at least one display 950, based on the position of the user's eye.

For example, visual quality (e.g., resolution, brightness, saturation, grayscale, and PPI) of a first area related to the gaze within the image and visual quality of a second area distinguished from the first area may be different. The wearable device 900 may obtain an image having the visual quality of the first area matching the user's gaze and the visual quality of the second area by using foveated rendering. For example, when the wearable device 900 supports an iris recognition function, user authentication may be performed based on iris information obtained using the eye tracking camera 960-1. An example in which the eye tracking camera 960-1 is disposed toward the user's right eye is illustrated in FIG. 9B, but the embodiment is not limited thereto, and the eye tracking camera 960-1 may be disposed alone toward the user's left eye or may be disposed toward two eyes.

In an embodiment, the photographing camera 960-4 may photograph a real image or background to be matched with a virtual image in order to implement the augmented reality or mixed reality content. The photographing camera 960-4 may be used to obtain an image having a high resolution based on a high resolution (HR) or a photo video (PV). The photographing camera 960-4 may photograph an image of a specific object existing at a position viewed by the user and may provide the image to the at least one display 950. The at least one display 950 may display one image in which a virtual image provided through the at least one optical device 982 and 984 is overlapped with information on the real image or background including an image of the specific object obtained by using the photographing camera 960-4. The wearable device 900 may compensate for depth information (e.g., a distance between the wearable device 900 and an external object obtained through a depth sensor), by using an image obtained through the photographing camera 960-4. The wearable device 900 may perform object recognition through an image obtained using the photographing camera 960-4. The wearable device 900 may perform a function (e.g., auto focus) of focusing an object (or subject) within an image and/or an optical image stabilization (OIS) function (e.g., an anti-shaking function) by using the photographing camera 960-4. While displaying a screen representing a virtual space on the at least one display 950, the wearable device 900 may perform a pass through function for displaying an image obtained through the photographing camera 960-4 overlapping at least a portion of the screen. In an embodiment, the photographing camera 960-4 may be disposed on the bridge 903 disposed between the first rim 901 and the second rim 902.

The eye tracking camera 960-1 may implement a more realistic augmented reality by matching the user's gaze with the visual information provided on the at least one display 950, by tracking the gaze of the user wearing the wearable device 900. For example, when the user looks at the front, the wearable device 900 may naturally display environment information associated with the user's front on the at least one display 950 at a position where the user is positioned. The eye tracking camera 960-1 may be configured to capture an image of the user's pupil in order to determine the user's gaze. For example, the eye tracking camera 960-1 may receive gaze detection light reflected from the user's pupil and may track the user's gaze based on the position and movement of the received gaze detection light. In an embodiment, the eye tracking camera 960-1 may be disposed at a position corresponding to the user's left and right eyes. For example, the eye tracking camera 960-1 may be disposed in the first rim 901 and/or the second rim 902 to face the direction in which the user wearing the wearable device 900 is positioned.

The motion recognition camera 960-2 and 960-3 may provide a specific event to the screen provided on the at least one display 950 by recognizing the movement of the whole or portion of the user's body, such as the user's torso, hand, or face. The motion recognition camera 960-2 and 960-3 may obtain a signal corresponding to motion by recognizing the user's motion (e.g., gesture recognition), and may provide a display corresponding to the signal to the at least one display 950. The processor may identify a signal corresponding to the operation and may perform a preset function based on the identification. The motion recognition camera 960-2 and 960-3 may be used to perform simultaneous localization and mapping (SLAM) for 6 degrees of freedom pose (6 dof pose) and/or a space recognition function using a depth map. The processor may perform a gesture recognition function and/or an object tracking function, by using the motion recognition camera 960-2 and 960-3. In an embodiment, the motion recognition camera 960-2 and camera 960-3 may be disposed on the first rim 901 and/or the second rim 902.

The camera 960 included in the wearable device 900 is not limited to the above-described eye tracking camera 960-1 and the motion recognition camera 960-2 and 960-3. For example, the wearable device 900 may identify an external object included in the FoV by using a camera disposed toward the user's FoV. The wearable device 900 identifying the external object may be performed based on a sensor for identifying a distance between the wearable device 900 and the external object, such as a depth sensor and/or a time of flight (ToF) sensor. The camera 960 disposed toward the FoV may support an autofocus function and/or an optical image stabilization (OIS) function. For example, in order to obtain an image including a face of the user wearing the wearable device 900, the wearable device 900 may include the camera 960 (e.g., a face tracking (FT) camera) disposed toward the face.

Although not illustrated, the wearable device 900 according to an embodiment may further include a light source (e.g., LED) that emits light toward a subject (e.g., user's eyes, face, and/or an external object in the FoV) photographed by using the camera 960. The light source may include an LED having an infrared wavelength. The light source may be disposed on at least one of the frame 909, and the hinge units 906 and 907.

According to an embodiment, the battery module 970 may supply power to electronic components of the wearable device 900. In an embodiment, the battery module 970 may be disposed in the first temple 904 and/or the second temple 905. For example, the battery module 970 may be a plurality of battery modules 970. The plurality of battery modules 970, respectively, may be disposed on each of the first temple 904 and the second temple 905. In an embodiment, the battery module 970 may be disposed at an end of the first temple 904 and/or the second temple 905.

The antenna module 975 may transmit the signal or power to the outside of the wearable device 900 or may receive the signal or power from the outside. In an embodiment, the antenna module 975 may be disposed in the first temple 904 and/or the second temple 905. For example, the antenna module 975 may be disposed close to one surface of the first temple 904 and/or the second temple 905.

The speaker 955 may output a sound signal to the outside of the wearable device 900. A sound output module may be referred to as a speaker. In an embodiment, the speaker 955 may be disposed in the first temple 904 and/or the second temple 905 in order to be disposed adjacent to the ear of the user wearing the wearable device 900. For example, the speaker 955 may include a second speaker 955-2 disposed adjacent to the user's left ear by being disposed in the first temple 904, and a first speaker 955-1 disposed adjacent to the user's right ear by being disposed in the second temple 905.

The light emitting module (not illustrated) may include at least one light emitting element. The light emitting module may emit light of a color corresponding to a specific state or may emit light through an operation corresponding to the specific state in order to visually provide information on a specific state of the wearable device 900 to the user. For example, when the wearable device 900 requires charging, it may emit red light at a constant cycle. In an embodiment, the light emitting module may be disposed on the first rim 901 and/or the second rim 902.

Referring to FIG. 9B, according to an embodiment, the wearable device 900 may include the printed circuit board (PCB) 990. The PCB 990 may be included in at least one of the first temple 904 or the second temple 905. The PCB 990 may include an interposer disposed between at least two sub PCBs. On the PCB 990, one or more hardware (e.g., hardware illustrated by different blocks of FIG. 4) included in the wearable device 900 may be disposed. The wearable device 900 may include a flexible PCB (FPCB) for interconnecting the hardware.

According to an embodiment, the wearable device 900 may include at least one of a gyro sensor, a gravity sensor, and/or an acceleration sensor for detecting the posture of the wearable device 900 and/or the posture of a body part (e.g., a head) of the user wearing the wearable device 900. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 900 may identify the user's motion and/or gesture performed to execute or stop a specific function of the wearable device 900 based on the IMU.

FIGS. 10A to 10B illustrate an example of an exterior of a wearable device according to an embodiment. The wearable device 1000 of FIGS. 10A to 10B may include at least a portion of hardware of the wearable device 900 described with reference to FIGS. 9A and/or 9B. According to an embodiment, an example of an exterior of a first surface 1010 of a housing of the wearable device 1000 may be illustrated in FIG. 10A, and an example of an exterior of a second surface 1020 opposite to the first surface 1010 may be illustrated in FIG. 10B.

Referring to FIG. 10A, according to an embodiment, the first surface 1010 of the wearable device 1000 may have an attachable shape on the user's body part (e.g., the user's face). Although not illustrated, the wearable device 1000 may further include a strap for being fixed on the user's body part, and/or one or more temples (e.g., the first temple 904 and/or the second temple 905 of FIGS. 9A to 9B). A first display 950-1 for outputting an image to the left eye among the user's two eyes and a second display 950-2 for outputting an image to the right eye among the user's two eyes may be disposed on the first surface 1010. The wearable device 1000 may further include rubber or silicon packing, which are formed on the first surface 1010, for preventing interference by light (e.g., ambient light) different from the light emitted from the first display 950-1 and the second display 950-2.

According to an embodiment, the wearable device 1000 may include a camera 960-1 for photographing and/or tracking two eyes of the user adjacent to each of the first display 950-1 and the second display 950-2. The camera 960-1 may be referred to as the gaze tracking camera 960-1 of FIG. 9B. According to an embodiment, the wearable device 1000 may include cameras 960-5 and 960-6 for photographing and/or recognizing the user's face. The cameras 960-5 and 960-6 may be referred to as a FT camera. The wearable device 1000 may control an avatar representing a user in a virtual space, based on a motion of the user's face identified using the cameras 960-5 and 960-6. For example, the wearable device 1000 may change a texture and/or a shape of a portion (e.g., a portion of an avatar representing a human face) of the avatar, by using information obtained by the cameras 960-5 and 960-6 (e.g., the FT camera) and representing the facial expression of the user wearing the wearable device 1000.

Referring to FIG. 10B, a camera (e.g., cameras 960-7, 960-8, 960-9, 960-10, 960-11, and 960-12), and/or a sensor (e.g., the depth sensor 1030) for obtaining information associated with the external environment of the wearable device 1000 may be disposed on the second surface 1020 opposite to the first surface 1010 of FIG. 10A. For example, the cameras 960-7, 960-8, 960-9, and 960-10 may be disposed on the second surface 1020 in order to recognize an external object. The cameras 960-7, 960-8, 960-9, and 960-10 of FIG 10B may correspond to as the motion recognition cameras 960-2 and 960-3 of FIG. 9B.

For example, by using cameras 960-11 and 960-12, the wearable device 1000 may obtain an image and/or video to be transmitted to each of the user's two eyes. The camera 960-11 may be disposed on the second surface 1020 of the wearable device 1000 to obtain an image to be displayed through the second display 950-2 corresponding to the right eye among the two eyes. The camera 960-12 may be disposed on the second surface 1020 of the wearable device 1000 to obtain an image to be displayed through the first display 950-1 corresponding to the left eye among the two eyes. The cameras 960-11 and 960-12 may may correspond to as the photographing camera 960-4 of FIG. 9B.

According to an embodiment, the wearable device 1000 may include the depth sensor 1030 disposed on the second surface 1020 in order to identify a distance between the wearable device 1000 and the external object. By using the depth sensor 1030, the wearable device 1000 may obtain spatial information (e.g., a depth map) about at least a portion of the FoV of the user wearing the wearable device 1000. Although not illustrated, a microphone for obtaining sound outputted from the external object may be disposed on the second surface 1020 of the wearable device 1000. The number of microphones may be one or more according to embodiments.

In an embodiment, a method of identifying a location and/or a direction of a wearable device in an external space including a reflector may be required. As described above, according to an embodiment, a wearable device (e.g., the wearable device 101 of FIG. 1, the wearable device 900 of FIGS. 9A and 9B, and/or the wearable device 1000 of FIGS. 10A and 10B) may comprise a camera (e.g., the camera 225 of FIG. 2A), memory (e.g., the memory 215 of FIG. 2A), comprising one or more storage media, for storing instructions, and the at least one processor (e.g., the processor 210 of FIG. 2A). The instructions, when executed by the at least one processor individually or collectively, may cause the wearable device to obtain an image (e.g., the images 140 and 150 of FIG. 1 and/or the images 521, 522, 523, and 524 of FIG. 5A) with respect to an external space including the wearable device by using the camera. The instructions, when executed by the at least one processor individually or collectively, may cause the wearable device to identify a portion (e.g., the portion 430 of FIG. 4, the portion 512 of FIGS. 5A to 5B and/or the portion 732 of FIG. 7) of the image associated with a reflector (e.g., the reflector 130 of FIG. 1, the reflector 510 of FIG. 5A, and/or the reflector 621 of FIGS. 6A to 6C) reflecting light based on object recognition with respect to the image. The instructions, when executed by the at least one processor individually or collectively, may cause the wearable device to provide, by executing a software application by using information based on whether each of feature points of the image is included in the portion, a virtual space at least partially mapped to the external space.

For example, the instructions, when executed by the at least one processor individually or collectively, may cause the wearable device to determine, based on a size of the portion in the image, whether at least one feature point identified from the portion among the feature points is used to identify a location of the wearable device in the external space.

For example, the instructions, when executed by the at least one processor individually or collectively, may cause the wearable device to display, in response to the portion associated with the reflector, a visual object for verifying the reflector on a display of the wearable device.

For example, the instructions, when executed by the at least one processor individually or collectively, may cause the wearable device to identify first feature points surrounding the portion among the feature points of the image that is obtained at a first timing. The instructions, when executed by the at least one processor individually or collectively, may cause the wearable device to identify, based on second feature points which are matched to the first feature points and are included in another image that is obtained at a second timing different from the first timing, another portion associated with the reflector in the other image.

For example, the instructions, when executed by the at least one processor individually or collectively, may cause the wearable device to identify, based on identifiers respectively assigned to feature points included in the other image, the second feature points matched to the first feature points.

For example, the instructions, when executed by the at least one processor individually or collectively, may cause the wearable device to display, by executing instructions of the software application for reproducing the virtual space based on the information, at least portion of the virtual space that is associated with the external space on a display of the wearable device.

For example, the instructions, when executed by the at least one processor individually or collectively, may cause the wearable device to determine, based on a location of the wearable device in the external space indicated by the information, a location of the wearable device in the virtual space.

For example, the instructions, when executed by the at least one processor individually or collectively, may cause the wearable device to identify, by using a neural network to which the image is inputted, a location of the portion in the image.

As described above, according to an embodiment, a method of a wearable device may comprise obtaining an image with respect to an external space including the wearable device by using a camera of the wearable device (e.g., the operation 810 of FIG. 8). The method may comprise identifying a portion of the image associated with a reflector reflecting light based on object recognition with respect to the image. The method may comprise providing, by executing a software application by using information based on whether each of feature points of the image is included in the portion, a virtual space at least partially mapped to the external space (e.g., the operation 850 of FIG. 8).

For example, the method may comprise determining, based on a size of the portion in the image, whether at least one feature point identified from the portion among the feature points is used to identify a location of the wearable device in the external space. The method may comprise obtaining, based on whether the at least one feature point is used to identify the location, the information indicating the external space.

For example, the identifying may comprise displaying, in response to the portion associated with the reflector, a visual object for verifying the reflector on a display of the wearable device.

For example, the identifying may comprise identifying first feature points surrounding the portion among the feature points of the image that is obtained at a first timing. The method may comprise identifying, based on second feature points which are matched to the first feature points and are included in another image that is obtained at a second timing different from the first timing, another portion associated with the reflector in the other image.

For example, the identifying the other portion may comprise identifying, based on identifiers respectively assigned to feature points included in the other image, the second feature points matched to the first feature points.

For example, the providing may comprise displaying, by executing instructions of the software application for reproducing the virtual space based on the information, at least portion of the virtual space that is associated with the external space on a display of the wearable device.

For example, the providing may comprise determining, based on a location of the wearable device in the external space indicated by the information, a location of the wearable device in the virtual space.

For example, the identifying may comprise identifying, by using a neural network to which the image is inputted, a location of the portion in the image.

As described above, according to an embodiment, a wearable device (e.g., the wearable device 101 of FIG. 1, the wearable device 900 of FIGS. 9A and 9B, and/or the wearable device 1000 of FIGS. 10A and 10B) may comprise a camera (e.g., the camera 225 of FIG. 2A), memory (e.g., the memory 215 of FIG. 2A) for storing instructions, and a processor (e.g., the processor 210 of FIG. 2A) for executing the instructions. The processor may be configured to identify an external space including the wearable device based on first feature points in an image (e.g., the images 140 and 150 of FIG. 1 and/or the images 521, 522, 523, and 524 of FIG. 5A) obtained by using the camera. The processor may be configured to identify, based on identifying the wearable device included in, among a first external space (e.g., the first external space 611 of FIGS. 6A to 6C) or a second external space (e.g., the second external space 612 of FIGS. 6A to 6C) including a reflector (e.g., the reflector 130 of FIG. 1, the reflector 510 of FIG. 5A, and/or the reflector 621 of FIGS. 6A to 6C) , the first external space next to the second external space, second feature points having coordinate values corresponding to the first external space and that were identified based on the camera. The processor may be configured to obtain information associated with the first external space based on the first feature points and fourth feature points, which are different from one or more third feature points associated with the reflector, among the second feature points. The processor may be configured to obtain, based on identifying the wearable device included, among the first external space or the second external space, in the second external space, information associated with the second external space by using the first feature points and the one or more third feature points.

For example, the processor may be configured to display, based on the obtained information, at least portion of a virtual space mapped to an external space including the wearable device among the first external space or the second external space, on a display of the wearable device.

For example, the processor may be configured to identify, by using a neural network to which the image is inputted, the first feature points in the image.

For example, the processor may be configured to identify, based on attributes of the second feature points, the one or more third feature points among the second feature points.

As described above, according to an embodiment, a method of a wearable device may comprise identifying an external space including the wearable device based on first feature points in an image obtained by using a camera of the wearable device. The method may comprise identifying, based on identifying the wearable device included in, among a first external space or a second external space including a reflector, the first external space next to the second external space, second feature points having coordinate values corresponding to the first external space and that were identified based on the camera. The method may comprise obtaining information associated with the first external space based on the first feature points and fourth feature points, which are different from one or more third feature points associated with the reflector, among the second feature points. The method may comprise obtaining, based on identifying the wearable device included, among the first external space or the second external space, in the second external space, information associated with the second external space by using the first feature points and the one or more third feature points.

For example, the method may comprise displaying, based on the obtained information, at least portion of a virtual space mapped to an external space including the wearable device among the first external space or the second external space, on a display of the wearable device.

For example, the identifying the external space may comprise identifying, by using a neural network to which the image is inputted, the first feature points in the image.

For example, the obtaining the information associated with the first external space may comprise identifying, based on attributes of the second feature points, the one or more third feature points among the second feature points.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computerreadable recording medium.

The method according to the embodiment may be implemented in the form of a program command that may be performed through various computer means and recorded on a computerreadable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device (101; 900; 1000), comprising:
a camera (225);
memory (215) comprising one or more storage media storing instructions; and
at least one processor (210) including processing circuitry, wherein the instructions, when executed by the at least one processor individually or collectively, cause the wearable device to:
obtain an image (140, 150; 521, 522, 523, 524) with respect to an external space including the wearable device by using the camera;
identify a portion (430; 512; 732) of the image associated with a reflector (130; 510; 621) reflecting light based on object recognition with respect to the image; and
provide, by executing a software application by using information based on whether each of feature points of the image is included in the portion, a virtual space at least partially mapped to the external space.

2. The wearable device of claim 1, wherein the instructions, when executed by the at least one processor individually or collectively, cause the wearable device to:
determine, based on a size of the portion in the image, whether at least one feature point identified from the portion among the feature points is used to identify a location of the wearable device in the external space.

3. The wearable device of claim 1 to claim 2, wherein the instructions, when executed by the at least one processor individually or collectively, cause the wearable device to:
display, in response to the portion associated with the reflector, a visual object for verifying the reflector on a display of the wearable device.

4. The wearable device of claim 1 to claim 3, wherein the instructions, when executed by the at least one processor individually or collectively, cause the wearable device to:
identify first feature points surrounding the portion among the feature points of the image that is obtained at a first timing; and
identify, based on second feature points which are matched to the first feature points and are included in another image that is obtained at a second timing different from the first timing, another portion associated with the reflector in the other image.

5. The wearable device of claim 1 to claim 4, wherein the instructions, when executed by the at least one processor individually or collectively, cause the wearable device to:
identify, based on identifiers respectively assigned to feature points included in the other image, the second feature points matched to the first feature points.

6. The wearable device of claim 1 to claim 5, wherein the instructions, when executed by the at least one processor individually or collectively, cause the wearable device to:
display, by executing instructions of the software application for reproducing the virtual space based on the information, at least portion of the virtual space that is associated with the external space on a display of the wearable device.

7. The wearable device of claim 1 to claim 6, wherein the instructions, when executed by the at least one processor individually or collectively, cause the wearable device to:
determine, based on a location of the wearable device in the external space indicated by the information, a location of the wearable device in the virtual space.

8. The wearable device of claim 1 to claim 7, wherein the instructions, when executed by the at least one processor individually or collectively, cause the wearable device to:
identify, by using a neural network to which the image is inputted, a location of the portion in the image.

9. A method of a wearable device, comprising:
obtaining (810) an image with respect to an external space including the wearable device by using a camera of the wearable device;
identifying a portion of the image associated with a reflector reflecting light based on object recognition with respect to the image; and
providing (850), by executing a software application by using information based on whether each of feature points of the image is included in the portion, a virtual space at least partially mapped to the external space.

10. The method of claim 9, further comprises:
determining, based on a size of the portion in the image, whether at least one feature point identified from the portion among the feature points is used to identify a location of the wearable device in the external space; and
obtaining, based on whether the at least one feature point is used to identify the location, the information indicating the external space.

11. The method of claim 9 to claim 10, wherein the identifying comprises:
displaying, in response to the portion associated with the reflector, a visual object for verifying the reflector on a display of the wearable device.

12. The method of claim 9 to claim 11, wherein the identifying comprises:
identifying first feature points surrounding the portion among the feature points of the image that is obtained at a first timing; and
identifying, based on second feature points which are matched to the first feature points and are included in another image that is obtained at a second timing different from the first timing, another portion associated with the reflector in the other image.

13. The method of claim 9 to claim 12, wherein the identifying the other portion comprises:
identifying, based on identifiers respectively assigned to feature points included in the other image, the second feature points matched to the first feature points.

14. The method of claim 9 to claim 13, wherein the providing comprises:
displaying, by executing instructions of the software application for reproducing the virtual space based on the information, at least portion of the virtual space that is associated with the external space on a display of the wearable device.

15. The method of claim 9 to claim 14, wherein the providing comprises:
determining, based on a location of the wearable device in the external space indicated by the information, a location of the wearable device in the virtual space.
